# EUROPÄISCHE PATENTSCHRIFT

(11) **EP 2 805 180 B1**
(45) Veröffentlichungstag und Bekanntmachung des Hinweises auf die Patenterteilung: **23.10.2019**
(21) Anmeldenummer: 13700319.0
(22) Anmeldetag: 16.01.2013
(51) Int. Cl.: G01S 7/51, G01S 17/66, G01S 17/42

(54) **LASERTRACKER MIT FUNKTIONALITÄT ZUR GRAPHISCHEN ZIELBEREITSTELLUNG**
LASER TRACKER WITH GRAPHICAL TARGETING FUNCTIONALITY
APPAREIL DE SUIVI LASER DOTÉ D'UNE FONCTIONNALITÉ POUR LA PRÉPARATION DE CIBLES GRAPHIQUES

(30) Priorität: 17.01.2012 EP 12151438
(43) Veröffentlichungstag der Anmeldung: 26.11.2014
(73) Patentinhaber: Leica Geosystems AG, 9435 Heerbrugg (CH)
(72) Erfinder: KWIATKOWSKI, Tomasz, CH-5054 Moosleerau (CH); BÖCKEM, Burkhard, CH-5415 Rieden AG (CH)
(74) Vertreter: Kaminski Harmann
(86) Internationale Anmeldenummer: PCT/EP2013/050762
(87) Internationale Veröffentlichungsnummer: WO 2013/107781

(56) Entgegenhaltungen:
- EP-A1- 2 219 011
- WO-A1-2004/036145
- WO-A1-2007/079600
- WO-A1-2010/148525
- HERNÂ'N BADINO ET AL: "Integrating LIDAR into Stereo for Fast and Improved Disparity Computation", 3D IMAGING, MODELING, PROCESSING, VISUALIZATION AND TRANSMISSION (3DIMPVT), 2011 INTERNATIONAL CONFERENCE ON, IEEE, 16. Mai 2011 (2011-05-16), Seiten 405-412, XP031896512, DOI: 10.1109/3DIMPVT.2011.58 ISBN: 978-1-61284-429-9

## Beschreibung

Die Erfindung betrifft einen Lasertracker zur fortlaufenden Verfolgung eines reflektierenden Ziels und zur Positionsbestimmung des Ziels nach dem Oberbegriff des Anspruchs 1, ein System aus Lasertracker und Steuerungseinheit nach Anspruch 11 und ein Zielbereitstellungsverfahren nach Anspruch 13.

Messvorrichtungen, die für eine fortlaufende Verfolgung eines Zielpunkts und eine koordinative Positionsbestimmung dieses Punkts ausgebildet sind, können allgemein, insbesondere im Zusammenhang mit der industriellen Vermessung, unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z.B. mittels Laufzeit- oder Phasendifferenzmessung ermittelt.

Lasertracker nach dem Stand der Technik können zusätzlich mit einer optischen Bilderfassungseinheit mit einem zweidimensionalen, lichtempfindlichen Array, z.B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera können dabei insbesondere derart aufeinander montiert sein, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Weiters kann die Kamera - z.B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines so genannten Messhilfsinstruments mit Markierungen, deren relative Lage zueinander bekannt ist, kann auf eine Orientierung eines an dem Messhilfsinstrument angeordneten Objekts (z.B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Derartige Messhilfsinstrumente können durch so genannte Tastwerkzeuge, die mit ihrem Kontaktpunkt auf einem Punkt des Zielobjektes positioniert werden, verkörpert sein. Das Tastwerkzeug weist Markierungen, z.B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Zur Entfernungsmessung weisen Lasertracker des Standes der Technik zumindest einen Distanzmesser auf, wobei dieser z.B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Beispielsweise ist eine derartige Kombination von Messmitteln zur Entfernungsbestimmung durch das Produkt AT901 der Leica Geosystems AG bekannt. Die in diesem Zusammenhang für die Distanzmessung eingesetzten Interferometer verwenden hauptsächlich - aufgrund der grossen Kohärenzlänge und der damit ermöglichten Messreichweite - als Lichtquellen HeNe-Gaslaser. Die Kohärenzlänge des HeNe-Lasers kann dabei einige hundert Meter betragen, so dass mit relativ einfachen Interferometer-Aufbauten die in der industriellen Messtechnik geforderten Reichweiten erzielt werden können. Eine Kombination eines Absolutdistanzmessers und eines Interferometers zur Entfernungsbestimmung mit einem HeNe-Laser ist beispielsweise aus der WO 2007/079600 A1 bekannt.

Ausserdem wird in modernen Trackersystemen - zunehmend standardisiert - auf einem Sensor eine Ablage des empfangenen Messstrahls von einer Nullposition ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Der beschriebenen Zielverfolgung muss ein Ankoppeln des Laserstrahls an den Reflektor vorausgehen. Hierzu kann am Tracker zusätzlich eine Erfassungseinheit mit einem positionssensitiven Sensor und mit einem verhältnismässig grossen Sichtfeld angeordnet sein. Zudem sind in gattungsgemässe Geräte zusätzliche Beleuchtungsmittel integriert, mit welchen das Ziel bzw. der Reflektor, insbesondere mit einer definierten, sich von der Wellenlänge der Distanzmessmittel unterscheidenden Wellenlänge, beleuchtet wird. Der Sensor kann in diesem Zusammenhang sensitiv auf einen Bereich um diese bestimmte Wellenlänge ausgebildet sein, um beispielsweise Fremdlichteinflüsse zu reduzieren oder gänzlich zu verhindern. Mittels der Beleuchtungsmittel kann das Ziel beleuchtet und mit der Kamera ein Bild des Ziels mit beleuchtetem Reflektor erfasst werden. Durch die Abbildung des spezifischen (wellenlängenspezifischen) Reflexes auf dem Sensor können die Reflexposition im Bild aufgelöst und damit ein Winkel relativ zur Erfassungsrichtung der Kamera und eine Richtung zum Ziel bzw. Reflektor bestimmt werden. Eine Ausführungsform eines Lasertrackers mit einer derartigen Zielsucheinheit ist beispielsweise aus der WO 2010/148525 A1 bekannt. In Abhängigkeit der so ableitbaren Richtungsinformation kann die Ausrichtung des Messlaserstrahls derart verändert werden, dass ein Abstand zwischen dem Laserstrahl und dem Reflektor, an welchen der Laserstrahl angekoppelt werden soll, verkleinert wird.

Eine Nachteil dieses Ankoppelvorgangs besteht darin, dass beim Erfassen der an Zielen reflektierten Beleuchtungsstrahlung mehr als ein Reflex von mehreren unterschiedlichen Zielen, welche im Sichtbereich des positionssensitiven Sensors liegen, erfasst wird und aufgrund der dadurch entstehenden Vieldeutigkeit nicht verlässlich an ein gewünschtes Ziel angekoppelt werden kann. Dabei kann es für einen Benutzer des Messsystems mit erheblichem Aufwand verbunden sein, den Laserstrahl auf dieses gewünschte Ziel auszurichten. Beispielsweise müssen dabei die Koordinaten der detektierten Reflexe mit den möglichen Zielen verglichen und in Abhängigkeit dieses Vergleichs das Ziel durch den Benutz identifiziert werden. Ein solcher Vorgang kann sich je nach Anzahl der erfassten Reflexe und der in einer Messumgebung befindlichen Ziele als sehr zeitintensiv herausstellen und damit den Aufwand für ein Initialisieren eines Messvorgangs stark erhöhen. Insbesondere erfordert ein solches Zielauffinden und Ankoppeln eine qualifizierte Befähigung und Erfahrung des Benutzers und birgt dabei - im Speziellen in Abhängigkeit der Benutzerqualifikation - nicht vernachlässigbare Fehlerquellen, wodurch beispielsweise nicht das gewünschte sondern ein weiteres Ziel, welches von ähnlicher Gestalt ist und sich nahe an dem gewünschten ziel befindet, angezielt werden kann und diese Verwechslung aufgrund der Ähnlichkeiten vom Benutzer nicht bemerkt wird.

Es ist daher eine Aufgabe der vorliegenden Erfindung einen verbesserten Lasertracker bereitzustellen, welcher das Verfolgen und Positionsbestimmen eines Ziels ermöglicht, wobei ein Identifizieren, und insbesondere Anzielen, eines gewünschten Ziels einfacher und schneller erfolgen kann.

Im Speziellen ist es eine Aufgabe der vorliegenden Erfindung einen Lasertracker mit einer Funktionalität bereitzustellen, mittels derer ein gewünschtes Ziel aus einer Menge von Zielen ausgewählt und angezielt werden kann oder eine Reihenfolge für das sukzessive Vermessen von mehreren Zielen in benutzerfreundlicher Weise festgelegt werden kann.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft einen Lasertracker zur fortlaufenden Verfolgung eines reflektierenden Objekts und zur Positionsbestimmung des Objekts, mit einer eine Stehachse definierenden Basis, einer Strahllenkeinheit zur Emission einer Messstrahlung und zum Empfang von zumindest einem Teil der am Objekt reflektierten Messstrahlung, wobei die Strahllenkeinheit um die Stehachse und eine Neigungsachse relativ zur Basis motorisiert schwenkbar ist und durch eine Emissionsrichtung der Messstrahlung eine Messachse definiert ist, einer Entfernungsmesseinheit zur präzisen Distanzbestimmung zum Objekt vermittels der Messstrahlung, einer Winkelmessfunktionalität zur Bestimmung einer Ausrichtung der Strahllenkeinheit relativ zur Basis, einer Zielsucheinheit mit Beleuchtungsmitteln zur Erzeugung elektromagnetischer Beleuchtungsstrahlung und zumindest einer Zielsuchkamera mit einem positionssensitiven Detektor, wobei die Zielsuchkamera ein Zielsuchsichtfeld definiert, das Zielsuchsichtfeld mittels der Beleuchtungsmittel beleuchtbar ist, mit der Zielsuchkamera ein Suchbild zur positionsabhängigen Identifikation von Zielen erfassbar ist und Positionen von im Suchbild erfassten, jeweilige reflektierende Ziele repräsentierenden Beleuchtungsstrahlungsreflexen mittels des positionssensitiven Detektors identifizierbar und als Suchbildpositionen im Suchbild bestimmbar sind, einer Übersichtskamera, wobei ein Übersichtssichtfeld der Übersichtskamera mit dem Zielsuchsichtfeld überlappt, mit der Übersichtskamera ein zumindest teilweise den visuellen Spektralbereich wiedergebendes Übersichtsbild erfassbar ist, insbesondere zur Darstellung für einen Benutzer, insbesondere ein Farbbild, und die Zielsuchkamera und die Übersichtskamera in bekannter Positions- und Ausrichtungsrelation relativ zueinander angeordnet sind, und einer Verarbeitungseinheit, wobei der Lasertracker eine Zielbereitstellungsfunktionalität aufweist, wobei bei Ausführung der Zielbereitstellungsfunktionalität durch die Verarbeitungseinheit in Abhängigkeit von den Suchbildpositionen und unter Berücksichtigung der Positions- und Ausrichtungsrelation mittels Bildverarbeitung graphische, die Ziele im Übersichtsbild repräsentierende Markierungen in das Übersichtsbild eingefügt werden, wobei die Beleuchtungsstrahlung einen definierten Beleuchtungswellenlängenbereich, aufweist und die Zielsuchkamera zur Erfassung elektromagnetischer Strahlung in einem, Bereich um den definierten Beleuchtungswellenlängenbereich ausgebildet ist.

Mit einem derartigen erfindungsgemässen Lasertracker können somit die mit der Zielsuchkamera gefundenen Ziele in dem Übersichtsbild derart eingefügt werden, dass die Positionen der Ziele durch Markierungen, die dem Übersichtsbild überlagert sind, oder durch Markierungen, die in das Übersichtsbild eingebettet sind, repräsentiert werden. Die Markierungen können dabei in Form von Symbolen, z.B. als Zielpunkte anzeigende Kreuze oder Kreise, oder Bezeichnungen, z.B. die Koordinaten einer Punktposition oder Entfernungen angebende Ziffern, eingefügt werden. So erfolgt eine im Sinne der Zielbereitstellungsfunktionalität erfolgende Zielanzeige (mittels graphischer Markierungen) durch eine positionstreue Übertragung der Suchbildpositionen in das Übersichtsbild. Das mit Lasertrackern erfassbare Suchbild gibt typischerweise lediglich Punkte oder Positionen wieder, an welchen die Beleuchtungsreflexe auf den positionssensitiven Detektor der Zielsuchkamera abgebildet sind, jedoch keine spektrale Information. Durch die Übertragung der Suchbildpositionen in das Übersichtsbild kann ein den visuellen Spektralbereich darstellendes Bild erzeugt werden, wobei zudem Positionen der Ziele in der im Bild erfassten Umgebung verzeichnet sind. Dadurch kann z.B. einem Benutzer des Lasertrackers eine benutzerfreundlichere Übersicht über eine Messumgebung mit den dort befindlichen Zielen bereitgestellt werden. Generell ist das Übersichtsbild dabei derart spektral erfassbar und anzeigbar, dass ein von Menschen ohne technische Hilfsmittel erfassbarer visueller Bereich zumindest teilweise durch das Übersichtsbild wiedergebbar ist.

Prinzipiell wird im Rahmen der Erfindung das Einfügen der Markierungen in das Übersichtsbild zum einen verstanden als ein Einfügen der Markierungen in Form einer graphischen Überlagerung des Übersichtsbilds mit den Markierungen, z.B. durch Verwendung mehrerer übereinander liegender Bildebenen (Bildlayers), wobei diese teilweise transparent sein können. Ausserdem können die Markierungen in das Übersichtsbild durch eine Veränderung des ursprünglichen Übersichtsbilds, z.B. durch eine pixelweise Modifikation der Bildinformation, eingebracht werden, sodass die Markierungen in das Übersichtsbild als "eingebrannt" angesehen werden können und dadurch ein modifiziertes Übersichtsbild erzeugt wird. Darüber hinaus wird allgemein als Einfügen der Markierungen eine graphische Repräsentation der Suchbildpositionen zusammen mit dem Übersichtsbild verstanden.

Erfindungsgemäss kann die Zielbereitstellungsfunktionalität somit eine positionstreue Übertragung der Suchbildpositionen in das Übersichtsbild bereitstellen, wobei die identifizierten Ziele mittels der graphischen Markierungen positionstreu im Übersichtsbild anzeigbar sind.

Bezüglich des Einfügens und der Darstellung der Markierungen sind erfindungsgemäss in Abhängigkeit von den im Suchbild erfassten Beleuchtungsstrahlungsreflexen eine Form und insbesondere eine räumliche Ausdehnung der Ziele bestimmbar und die Markierungen im Übersichtsbild in Abhängigkeit von der Form und insbesondere der räumlichen Ausdehnung darstellbar.

Die Markierungen können auf einem Display zusammen mit dem Übersichtsbild derart dargestellt werden, dass zum einen die Position der jeweiligen Markierung im Übersichtsbild eine Position des durch die Markierung repräsentierten Ziels in der im Bild erfassten Umgebung anzeigt und zum anderen die Gestaltung der Markierung eine Information über die Ausgestaltung des Ziels bereitstellt. Beispielsweise kann eine Form der Markierung einem bestimmten Zieltyp, z.B. Prisma, und die Grösse der dargestellten Markierung ein Reflexionsvermögen oder eine räumlich Ausdehnung des Ziels angeben.

Ein Aspekt der Erfindung betrifft ausserdem die Ausgestaltung der Zielsuchkamera und der Übersichtskamera und deren jeweilige relative Anordnung zueinander. In diesem Zusammenhang können die Zielsuchkamera und die Übersichtskamera definierte Brennweiten aufweisen, insbesondere wobei die Brennweiten beider Kameras identisch, insbesondere konstant, sind. Mit einer solchen Brennweitenübereinstimmung kann eine Kombination der Markierungen mit dem Übersichtsbild erfolgen, indem die Suchbildpositionen korrespondierend zu deren Position im Suchbild an jeweiligen Positionen im Übersichtsbild eingefügt bzw. überlagert werden. Insbesondere kann das Zielbereitstellen dabei mittels der Suchbildpositionen von nur einer Zielsuchkamera erfolgen.

Insbesondere kann die Zielsuchkamera erfindungsgemäss derart angeordnet sein, dass deren optische Achse versetzt, insbesondere parallel versetzt, zur optischen Achse der Übersichtskamera angeordnet ist. Im Allgemeinen kann die optische Achse der Zielsuchkamera in einem definierten Winkel relativ zur optischen Achse der Übersichtskamera angeordnet sein. Je nach Anordnung der Kameras zueinander kann das Einfügen der Markierungen unter Berücksichtigung der jeweiligen Positionierung und Ausrichtung durchgeführt werden. Dadurch kann z.B. eine Genauigkeitssteigerung hinsichtlich der Positionierung der Markierungen im Übersichtsbild erreicht werden.

Weiters kann die Zielsuchkamera erfindungsgemäss mit deren optischer Achse versetzt zur Messachse angeordnet sein, insbesondere wobei der relative Versatz der optischen Achse der Zielsuchkamera zur Messachse bekannt ist.

Mit der erfindungsgemässen Kombination aus spezifischen Beleuchtungsmitteln und Zielsuchkamera können z.B. Fremdlichteinflüsse, die die erfassten Messwerte verfälschen können, verkleinert bzw. verhindert und damit das System robuster gegenüber Umwelteinflüssen konstruiert werden. So kann beispielsweise durch die Beleuchtungsmittel infrarote Strahlung emittiert und mit der Zielsuchkamera hauptsächlich Licht im Infrarotbereich (Absorptionspeak im infraroten Bereich mit einem schmalbandigen Detektionsbereich um eine zentrale Absorptionswellenlänge) erfasst werden, wobei Licht des visuellen Spektrums nicht detektiert wird.

Ferner kann der Lasertracker bzw. die Zielsucheinheit erfindungsgemäss eine weitere oder mehrere weitere Zielsuchkameras mit jeweils einem positionssensitiven Detektor und jeweils einem Zielsuchsichtfeld aufweisen, insbesondere wobei die eine weitere oder mehreren weiteren Zielsuchkameras zur Erfassung elektromagnetischer Strahlung im Bereich um den Beleuchtungswellenlängenbereich ausgebildet sind. Mit der Verwendung von einer weiteren oder mehreren weiteren Zielsuchkameras können zusätzliche Informationen hinsichtlich der erfassten Ziele generiert werden. So können beispielsweise grobe Entfernungen oder grobe Positionen der Ziele bestimmt und bei der Kombination der Markierungen mit dem Übersichtsbild zur Positionierung der Markierungen im Bild berücksichtigt werden.

In einer speziellen Ausführungsform der Erfindung können die Zielsuchkameras jeweils mit bekannter und fixer Positions- und Ausrichtungsrelation relativ zueinander und relativ zur Übersichtskamera derart angeordnet sein, dass die Zielsuchsichtfelder der Zielsuchkameras überlappen, insbesondere in einem gemeinsamen Sichtbereich mit dem Übersichtssichtfeld überlappen, und deren optische Achsen jeweils versetzt zur Messachse angeordnet sind.

Insbesondere können erfindungsgemäss - bei einer Anordnung von zwei oder mehreren Zielsuchkameras am Lasertracker - mit den Zielsuchkameras jeweils ein Suchbild mit Suchbildpositionen erfassbar und jeweilige, ein gemeinsames Ziel repräsentierende Suchbildpositionen derart gruppierbar sein, dass Grobentfernungen zu den Zielen in Abhängigkeit der gruppierten Suchbildpositionen bestimmbar sind, insbesondere räumliche Grobpositionen der Ziele.

Wird also ein Ziel mit den positionssensitiven Detektoren mehrerer Zielsuchkameras detektiert und jeweils eine Suchbildposition für das Ziel bestimmt, so kann in Abhängigkeit dieser Suchbildpositionen und gegebenenfalls in Abhängigkeit der Ausrichtungs- und Positionsrelation der Kameras jeweils eine Erfassungsrichtung zum Ziel bestimmt werden. Aus diesen Richtungen kann dann eine Position und/oder (grobe) Entfernung zum Ziel abgeleitet werden, wobei hierfür geometrische Rechengrundsätze (z.B. Sinussatz) oder bekannte Methoden der Stereophotogrammetrie eingesetzt werden können. Das Einfügen der Markierungen in das Übersichtsbild kann in Folge unter Berücksichtigung der jeweils für die Ziele bestimmten Zielentfernungen oder Zielpositionen erfolgen (und zusätzlich in Abhängigkeit des bekannten Achsversatzes der optischen Achse der Übersichtskamera von der Messachse bzw. den optischen Achsen der Zielsuchkameras).

Ferner können erfindungsgemäss die Grobentfernungen mit jeweiligen Bildinformationen des Übersichtsbilds derart verknüpft werden, dass ein zumindest teilweise perspektivisches Umgebungsbild erzeugbar ist. Werden somit für eine Anzahl von Zielen jeweilige grobe Entfernungen aus mindestens zwei erfassten Suchbildern bestimmt und die Entfernungsinformation den im Übersichtsbild erfassten korrespondierenden Zielen zugeordnet, so kann mittels dieser zusätzlich verfügbaren Information das erfasste Übersichtsbild derart verändert werden, dass das Bild zumindest teilweise perspektivisch dargestellt werden kann. Die Bildpunkte bzw. Bildbereiche im Übersichtsbild, welche positionsmässig mit den im Suchbild erfassten Suchbildpositionen korrespondieren, können auf Basis der abgeleiteten Entfernungsinformation plastisch dargestellt werden. Dadurch kann ein quasi-dreidimensionales Umgebungsbild erzeugt werden. Beispielsweise können somit perspektivische Bildverläufe in Abhängigkeit der Entfernungsinformationen zu einzelnen Zielen, insbesondere zwischen zwei benachbarten Zielen, modelliert werden.

Es können somit in diesem Zusammenhang erfindungsgemäss im Rahmen der Zielbereitstellungsfunktionalität in Abhängigkeit von den Suchbildpositionen, die mit den Zielsuchkameras bestimmt worden sind, die graphischen Markierungen in das Übersichtsbild oder in das zumindest teilweise perspektivische Umgebungsbild eingefügt werden, insbesondere wobei die Markierungen in Abhängigkeit von den Grobentfernungen eingefügt werden, insbesondere in Abhängigkeit von den Grobpositionen.

Im Rahmen der Erfindung kann der Lasertracker eine weitere oder mehrere weitere Übersichtskameras zur Erfassung von einem weiteren oder mehreren weiteren zumindest teilweise den visuellen Spektralbereich wiedergebenden Übersichtsbildern aufweisen, wobei aus dem Übersichtsbild und dem einen weiteren oder den mehrere weiteren Übersichtsbildern ein perspektivisches Übersichtsbild erzeugbar ist und die Zielbereitstellungsfunktionalität derart konfiguriert ist, dass bei Ausführung der Zielbereitstellungsfunktionalität die graphischen Markierungen in das perspektivische Übersichtsbild eingefügt werden.

Durch die mit mindestens zwei Übersichtskameras mögliche (gleichzeitige) Erfassung mehrerer Bilder einer gemeinsamen Zielumgebung aus unterschiedlichen Positionen kann aus diesen erfassten Bildern ein perspektivisches Übersichtsbild generiert werden, in welchem die Zielumgebung perspektivisch (dreidimensional) dargestellt ist. Dieses perspektivische Bild kann insbesondere mit photogrammetrischen Algorithmen und mittel Bildverarbeitung erzeugt werden. Hierzu können die Übersichtskameras in einer jeweiligen bekannten Positions- und Ausrichtungsrelation relativ zueinander angeordnet sein. Die durch die Zielsucheinheit detektierten Suchbildpositionen können als Markierungen in das perspektivische Übersichtsbild eingefügt werden, sodass auch in einem solchen perspektivischen Bild die Ziele durch die Markierungen repräsentiert werden können. Im Speziellen können auf Basis dieser mehreren Übersichtsbilder zusätzlich grobe Entfernungsinformationen zu Objekten in der Zielumgebung abgeleitet werden (Stereophotogrammetrie).

Das Übersichtsbild ist zum einen als ein mit der Übersichtskamera erfasstes Abbild einer Umgebung - korrespondierend zum Zielsuchsichtfeld - zu verstehen. Alternativ dazu kann das Übersichtsbild verkörpert sein durch ein mittels Bildverarbeitung modifiziertes erfasstes Bild, wobei die ursprünglich mit der Übersichtskamera erfasste Bildinformation verändert ist. Beispielsweise kann in diesem Zusammenhang dem erfassten Übersichtsbild eine zusätzliche Bildinformation hinzugefügt werden. Dabei können beispielsweise Bildelemente, z.B. auf Basis eines digitalen Modells (CAD-Modell), in das Bild eingefügt werden.

Im Rahmen einer derartigen Bildmodifikation können z.B. Konturen von digital konstruierten Objekten in Abhängigkeit der detektierten Suchbildpositionen in das erfasste Bild hinein "gefittet" werden, sodass ein Bild erzeugt wird, welches sowohl mittels der Übersichtskamera erfasste Objekte als auch z.B. CAD-Objekte bzw. Objekteile eines CAD-Modells aufweist. Bei einer Überlagerung von solchen CAD-Objekten mit dem erfassten Bild können zudem extrahierbare Kanten des Bilds herangezogen werden. Damit kann beispielsweise ein erfasstes zweidimensionales Bild mit einer dreidimensionalen CAD-Konstruktion kombiniert werden, sodass z.B. ein graphischer Vergleich von mittels der Zielsucheinheit erfassten (groben) Zielpositionen mit Soll-CAD-Daten erfolgen kann.

Hinsichtlich möglicher struktureller Ausführungsformen des erfindungsgemässen Lasertrackers kann der Lasertracker eine um die Stehachse relativ zur Basis motorisiert schwenkbare und die Neigungsachse bzw. eine horizontale oder liegende Achse definierende Stütze und eine als Strahllenkeinheit ausgebildete, um die Neigungsachse relativ zur Stütze motorisiert schwenkbare Anzieleinheit aufweisen, wobei die Anzieleinheit über eine Teleskopeinheit zur Emission der Messstrahlung und zum Empfang von zumindest einem Teil der am Ziel reflektierten Messstrahlung verfügt. In einer derartigen Ausführung kann ein Ausrichten der Messachse mittels eines Ausrichtens der Anzieleinheit erfolgen und die Zielsuchkamera sowie die Übersichtskamera (OVC = Over View Camera) können an der Anzieleinheit angeordnet sein.

Ein weiterer Aspekt der Erfindung betrifft ein System aus einem erfindungsgemässen Lasertracker und einer Steuerungseinheit zur Steuerung des Lasertrackers, wobei die Steuerungseinheit eine Anzeigeeinheit zur grafischen Anzeige des Übersichtsbilds und der Markierungen aufweist.

Ferner kann das System erfindungsgemäss eine Auswahlfunktion aufweisen, wobei im Rahmen der Auswahlfunktion eine gewünschte Markierung aus den in das Übersichtsbild eingefügten Markierungen vermittels der Anzeigeeinheit auswählbar ist, insbesondere durch einen Benutzer.

Im Speziellen kann erfindungsgemäss mittels der Auswahlfunktion eine Messreihenfolge der durch die Markierungen repräsentierten Ziele definierbar sein, insbesondere wobei die Ziele in der Messreihenfolge nacheinander durch ein Ausrichten der Messstrahlung auf die Ziele anzielbar und vermessbar sind.

Mittels eines solchen Systems aus Lasertracker und Steuerungseinheit kann insbesondere eine benutzerfreundliche Bedienung des Lasertrackers bereitgestellt werden und ein Überwachen eines Messprozesses erfolgen bzw. ein Erfassen von Messdaten benutzerseitig verfolgt werden. Im Speziellen kann die Steuerungseinheit als eine Computereinheit mit Steuerungs- und Auswertesoftware ausgebildet sein, wobei das Übersichtsbild allein oder zusammen mit den Markierungen auf einem mit dem Computer verbundenen Monitor angezeigt werden kann. Hierbei kann ein Algorithmus vorgesehen sein, mittels welchem die Auswahlfunktion bereitgestellt wird und wobei ein Benutzer beispielsweise durch Anklicken einer angezeigten Markierung ein gewünschtes Ziel auswählen kann. Dieses gewählte Ziel kann dann automatisch mit der Messstrahlung durch ein Ausrichten der Messachse derart, dass diese das Ziel schneidet, zur Positionsbestimmung des gewählten Ziels angezielt werden. Im Rahmen des Auswählvorgangs kann der Benutzer weiters eine Reihenfolge festlegen, in der die durch die Markierungen repräsentierten Ziele angezielt und vermessen werden sollen. Auch das Festlegen dieser Messreihenfolge kann durch ein Nacheinander-Anklicken von Markierungen erfolgen.

Ein weiterer Aspekt der Erfindung betrifft ein Zielbereitstellungsverfahren zum Einfügen von graphischen Markierungen in ein Übersichtsbild mit einem Lasertracker aufweisend eine eine Stehachse definierende Basis, eine Strahllenkeinheit zur Emission einer Messstrahlung und zum Empfang von zumindest einem Teil der an einem Objekt reflektierten Messstrahlung, wobei die Strahllenkeinheit um die Stehachse und eine Neigungsachse relativ zur Basis motorisiert schwenkbar ist, eine Entfernungsmesseinheit zum präzisen Distanzbestimmen vermittels der Messstrahlung, und eine Winkelmessfunktionalität zum Bestimmen einer Ausrichtung der Strahllenkeinheit relativ zur Basis, wobei im Rahmen des Zielbereitstellungsverfahrens erfolgen ein Beleuchten eines Zielsuchsichtfeldes mit elektromagnetischer Beleuchtungsstrahlung, ein Erfassen eines Suchbilds im Zielsuchsichtfeld zum positionsabhängigen Identifizieren von Zielen (64a-c,81), wobei Positionen von reflektierende Ziele repräsentierenden Beleuchtungsstrahlungsreflexen mittels des positionssensitiven Detektors als Suchbildpositionen im Suchbild identifiziert werden, und ein Erfassen des zumindest teilweise den visuellen Spektralbereich wiedergebenden Übersichtsbilds, wobei ein Übersichtssichtfeld definiert wird, insbesondere zum Darstellen für einen Benutzer, insbesondere ein Farbbild, wobei das Übersichtssichtfeld mit dem Zielsuchsichtfeld überlappt und ein Aufnehmen des Suchbilds und ein Aufnehmen des Übersichtsbilds von jeweils bekannter Position und in bekannter Ausrichtungsrelation erfolgt, wobei in Abhängigkeit von den Suchbildpositionen und unter Berücksichtigung der bekannten Positionen und Ausrichtungsrelation mittels Bildverarbeiten die graphischen, die Ziele im Übersichtsbild repräsentierenden Markierungen in das Übersichtsbild eingefügt werden, wobei die Beleuchtungsstrahlung einen definierten Beleuchtungswellenlängenbereich aufweist und die Zielsuchkamera zur Erfassung elektromagnetischer Strahlung in einem Bereich um den definierten Beleuchtungswellenlängenbereich ausgebildet ist.

Ausserdem können im Rahmen des Zielbereitstellungsverfahrens erfindungsgemäss zumindest ein weiteres Erfassen eines Suchbilds mit weiteren Suchbildpositionen von zumindest einer weiteren bekannten Position und in bekannter Ausrichtungsrelation erfolgen, jeweilige eine gemeinsames Ziel repräsentierende Suchbildpositionen gruppiert werden und Grobentfernungen zu den Zielen in Abhängigkeit der gruppierten Suchbildpositionen bestimmt werden, insbesondere räumliche Grobpositionen der Ziele, und im Rahmen des Zielbereitstellungsverfahrens die Markierungen in Abhängigkeit von den Suchbildpositionen in das Übersichtsbild eingefügt werden, und/oder in Abhängigkeit von den Grobentfernungen eingefügt werden, insbesondere in Abhängigkeit von den Grobpositionen.

Die Erfindung betrifft ferner ein Computerprogrammprodukt, das auf einem maschinenlesbaren Träger gespeichert ist, zur Steuerung des Beleuchtens des Zielsuchsichtfeldes, des Erfassens des Suchbilds und des Erfassens des Übersichtsbilds des erfindungsgemässen Zielbereitstellungsverfahrens. Zudem ist das Computerprogrammprodukt zur Ausführung des Einfügens der graphischen Markierungen in das Übersichtsbild in Abhängigkeit von den Suchbildpositionen mittels Bildverarbeiten des erfindungsgemässen Zielbereitstellungsverfahrens implementiert, wenn das Computerprogrammprodukt auf einer Verarbeitungseinheit eines erfindungsgemässen Lasertrackers ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: zwei Ausführungsformen eines erfindungsgemässen Lasertrackers und ein Messhilfsinstrument;
- Fig.2: eine weitere Ausführungsform eines erfindungsgemässen Lasertrackers mit zwei Zielsuchkameras und einer Übersichtskamera;
- Fig.3a-c: jeweils eine Anordnung von Zielsuchkameras und einer Übersichtskamera an einem erfindungsgemässen Lasertracker;
- Fig.4a-d: jeweils eine Ausführungsform einer Anzieleinheit eines erfindungsgemässen Lasertrackers mit Zielsuchkameras und jeweils einer Übersichtskamera;
- Fig.5: eine erfindungsgemässe Ausführungsform eines optischen Aufbaus eines erfindungsgemässen Lasertrackers; und
- Fig.6a-c: Übersichtsbilder, mit einer Zielsuchkamera erfasste Suchbildpositionen und eine Darstellung der übertragenen Suchbildpositionen im Übersichtsbild.

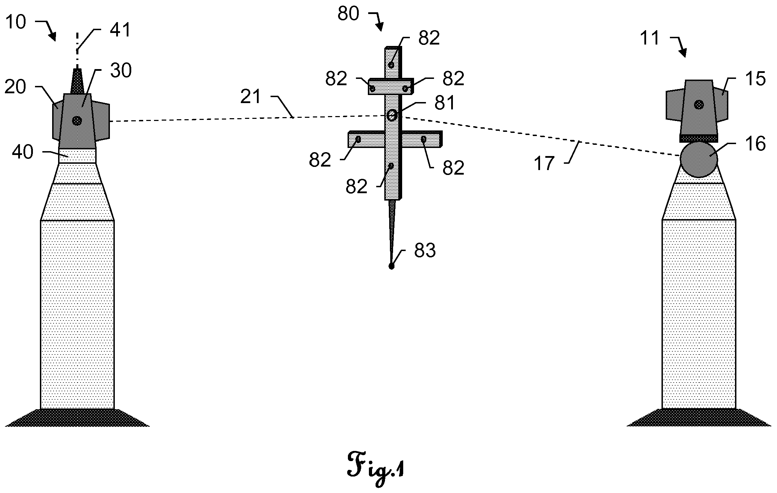

Figur 1 zeigt zwei Ausführungsformen für erfindungsgemässe Lasertracker 10,11 und ein Messhilfsinstrument 80, z.B. ein taktiles Messgerät. Der erste Lasertracker 10 weist eine Basis 40 und eine Stütze 30 auf, wobei die Stütze 30 um eine durch die Basis 40 definierte Schwenkachse 41 relativ zur Basis 40 schwenkbar bzw. rotierbar angeordnet ist. Zudem ist eine Anzieleinheit 20 derart an der Stütze 30 angeordnet, dass die Anzieleinheit 20 relativ zur Stütze 30 um eine Neigungsachse (Transitachse) schwenkbar ist. Durch eine so um zwei Achsen bereitgestellte Ausrichtungsmöglichkeit der Anzieleinheit 20 kann ein von dieser Einheit 20 emittierter Laserstrahl 21 ausgerichtet und damit Ziele angezielt werden. Die Schwenkachse 41 und die Neigungsachse sind hierbei im Wesentlichen orthogonal zueinander angeordnet, d.h. geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Laserstrahl 21 auf einen Reflektor 81 am Messhilfsinstrument 80 gerichtet und wird an diesem zurück zum Lasertracker 10 retro-reflektiert. Mittels dieses Messlaserstrahls 21 kann eine Entfernung zum Reflektor 81, insbesondere mittels Laufzeitmessung, mittels des Phasenmessprinzips oder mittels des Fizeau-Prinzips, bestimmt werden. Der Lasertracker 10 verfügt über eine Feindistanzmesseinheit zur Bestimmung dieser Entfernung zwischen dem Tracker 10 und dem Reflektor 81 und über Winkelmesser, die eine Stellung der Anzieleinheit 20, mittels derer der Laserstrahl 21 definiert ausgerichtet und geführt werden kann, und somit eine Ausbreitungsrichtung des Laserstrahls 21 bestimmbar machen.

Ausserdem weist der Lasertracker 10, insbesondere die Anzieleinheit 20, eine Bilderfassungseinheit zum Zweck einer Positionsbestimmung einer Sensorbelichtung auf einem Sensor bzw. in einem erfassten Bild einen CMOS auf oder ist insbesondere als CCD- oder Pixelsensorarray-Kamera ausgebildet. Derartige Sensoren erlauben eine positionssensitive Detektion von erfasster Belichtung auf dem Detektor. Weiters weist das Messhilfsinstrument 80 einen taktilen Sensor auf, dessen Kontaktpunkt 83 mit einem zu vermessenden Zielobjekt in Kontakt gebracht werden kann. Während dieser Kontakt zwischen dem Tastwerkzeug 80 und dem Zielobjekt besteht können eine Position des Kontaktpunktes 83 im Raum und damit die Koordinaten eines Punkts am Zielobjekt exakt bestimmt werden. Dieses Bestimmen erfolgt vermittels einer definierten relativen Positionierung des Kontaktpunkts 83 zum Reflektor 81 und zu am Messhilfsinstrument 80 angeordneten Orientierungsmarkierungen 82, die beispielsweise als Leuchtdioden ausgebildet sein können. Alternativ können die Orientierungsmarkierungen 82 auch derart ausgebildet sein, dass diese bei einem Beleuchten, z.B. mit Strahlung einer definierten Wellenlänge, die auftreffende Strahlung reflektieren (als Retroreflektoren ausgebildete Orientierungsmarkierungen 82), insbesondere eine bestimmte Leuchtcharakteristik zeigen, oder dass diese ein definiertes Muster oder Farbkodierung aufweisen. Aus der Lage bzw. Verteilung der Orientierungsmarkierungen 82 in einem mit dem Sensor der Bilderfassungseinheit erfassten Bild kann somit eine Orientierung des Tastwerkzeugs 80 bestimmt werden.

Der zweite Lasertracker 11 weist eine von der Bilderfassungseinheit 15 separierte Strahlführungseinheit 16 zur Emission eines zweiten Laserstrahls 17 auf, welcher ebenfalls auf den Reflektor 81 ausgerichtet ist. Sowohl der Laserstrahl 17 als auch die Bilderfassungseinheit 15 sind jeweils um zwei Achsen motorisiert schwenkbar und können dadurch derart ausgerichtet werden, dass mittels der Bilderfassungseinheit 15 das mit dem Laserstrahl 17 angezielte Ziel 81 und die Orientierungsmarkierungen 82 des Messhilfsinstruments 80 erfasst werden können. Somit können auch hier eine präzise Entfernung zum Reflektor 81 und eine Orientierung des Instruments 80 anhand der räumlichen Lage der Orientierungsmarkierungen 82 bestimmt werden.

Zur jeweiligen Ausrichtung der Laserstrahlen 17,21 auf den Reflektor 81 sind an den Lasertrackern 10,11 jeweils Beleuchtungsmittel zur Beleuchtung des Reflektors 81 mit Strahlung einer bestimmten Wellenlänge, insbesondere im infraroten Wellenlängenbereich, vorgesehen und zusätzliche zumindest eine Zielsuchkamera mit einem positionssensitiven Detektor, eine so genannte ATR-Kamera (automatic target recognition) an jedem Tracker 10,11 angeordnet. Die an dem Reflektor 81 reflektierte und zum Lasertracker 10,11 rückgestrahlte Beleuchtungsstrahlung kann jeweils mittels der Kamera detektiert und mit den positionssensitiven Detektoren kann eine Position des Reflektors 81 auf dem jeweiligen Detektor abgebildet werden. Somit kann sowohl mit dem ersten Lasertracker 10 als auch mit dem zweiten Lasertracker 11 eine abgebildete Position des Reflektors bestimmt und in Abhängigkeit dieser detektierten Suchbildpositionen das Ziel (Reflektor 81) im Bild aufgefunden und die Anzieleinheit 20 bzw. die Strahlführungseinheit 16 derart ausgerichtet werden, dass das Ziel mit dem Messstrahl 17,21 angezielt wird bzw. der Laserstrahl 17,21 dem Ziel 81 angenähert wird. Die Lasertracker 10,11 können zu diesem Zweck alternativ jeweils zumindest zwei Kameras mit jeweils einem positionssensitiven Detektor aufweisen, wobei für jeden Tracker 10,11 aus den jeweils zwei erfassten Suchbildpositionen für den Reflektor 81 jeweils beispielsweise eine Grobposition des Reflektors 81 bestimmt werden kann, z.B. nach allgemein bekannten Prinzipien der Photogrammetrie. Für eine robuste Detektion der Reflexe können insbesondere Filter in den Zielsuchkamera verbaut sein (z.B. wellenlängenabhängige Filter), welche z.B. nur das von den Beleuchtungsmitteln emittierte Licht transmittieren, und/oder Schwellwerte für einen Vergleich der erfassten Signale mit Signalsollwerten im Lasertracker hinterlegt sein.

Zudem weisen die erfindungsgemässen Lasertracker 10,11 jeweils eine Übersichtskamera auf, deren Sichtfeld - im Vergleich zu den Sichtfeldern der Zielsuchkameras mit positionssensitiven Detektoren - grösser ist und somit einen grösserer Bereich erfassbar macht. Mit diesen Übersichtskameras können Bilder von Objekten und Zielen im visuellen Lichtspektrum erfasst werden, wobei diese Bilder mittels einer Anzeigeeinheit an den Lasertrackern und/oder auf einem Display, welches an einer jeweiligen Steuerungseinheit zur Steuerung des jeweiligen Lasertrackers 10,11 angeordnet ist, ausgegeben werden können. Im Speziellen können mit der Übersichtskamera Farbbilder erfasst.

Weiters sind die ATR-Kameras (bzw. die nur jeweils eine Kamera) eines Trackers 10,11 erfindungsgemäss in einer bekannten Positionierung und Ausrichtung relativ zur Übersichtskamera des Trackers 10,11 angeordnet. Durch diese bekannte Anordnung kann im Rahmen einer Zielbereitstellungsfunktionalität, welche mit einer Verarbeitungseinheit des Lasertrackers 10,11 ausgeführt werden kann, eine oder mehrere Suchbildpositionen, die in mit den positionssensitiven Detektoren erfassten Suchbildern abgebildet sind, mit einem Übersichtsbild der Übersichtskamera überlagert werden. Hierzu können insbesondere ein jeweiliges Ziel repräsentierende Markierungen in das Übersichtsbild eingefügt werden. Mit einem derartigen Einfügen kann die positionsmässig im ATR-Bild erfasste Suchbildposition so mit dem Übersichtsbild verknüpft werden, dass die Suchbildposition im Übersichtsbild positionsgetreu bereitgestellt wird. Hierfür werden die Markierungen im Übersichtsbild in Abhängigkeit der Suchbildposition (und insbesondere in Abhängigkeit der relativen Positionierung von Übersichtszur Zielsuchkamera) bereitgestellt. Durch eine so geschaffene Positionsreferenzierung kann das Übersichtsbild nun dargestellt werden, wobei z.B. für jeden mit den Zielsuchkameras erfassten Zielreflex eine Markierung positionsgetreu im Übersichtsbild angezeigt wird. Die mit den positionssensitiven Detektoren erfasste reflektierte Messstrahlung kann ferner eine Beurteilung eines Ziels erlauben, z.B. hinsichtlich einer Form oder eines Reflexionsgrads des Ziels. Unter Berücksichtigung dieser zusätzlichen Information können die Ziele entsprechend der dadurch bestimmbaren Merkmale im Bild dargestellt werden, wobei beispielsweise die Grösse der im Übersichtsbild dargestellten Markierung das Reflexionsvermögen des Ziels repräsentiert.

Im Rahmen des Einfügens der Markierungen in das Übersichtsbild kann z.B. bei einer Verwendung von zwei Zielsuchkameras pro Lasertracker 10,11 zur Suchbildpositions- oder Grobentfernungsbestimmung ein Paralaxenproblem, welches durch den Versatz der Kameras zueinander besteht, aufgelöst werden, d.h. die sich (teilweise nur minimal) unterscheidenden Erfassungswinkel der Kameras können bestimmt und beim Einfügen der Markierungen berücksichtigt werden. Wird beispielsweise nur eine Zielsuchkamera am Lasertracker zur Bestimmung von Suchbildpositionen verwendet, so kann ein einfaches, grobes Projizieren der Suchbildpositionen und Darstellen dieser durch Markierungen erfolgen.

Die Beleuchtungsmittel, die Zielsuchkameras und/oder die Übersichtskamera können in diesem Zusammenhang z.B. an der Bilderfassungseinheit 15, der Strahlführungseinheit 16, der Anzieleinheit 20, der Stütze 30 und/oder der Basis 40 in jeweils definierten Positionen angeordnet sein.

Mittels der Kenntnis der Positionierung der Zielsuchkameras (bei zwei an einem Lasertracker vorhandenen Zielsuchkameras) relativ zu einer Emissionsrichtung des jeweiligen Messlaserstrahls 17,21 kann der Laserstrahl 17,21 auf die ermittelte Grobposition des Reflektors 81 ausgerichtet und an diesen angekoppelt werden (lock-on). Dadurch kann trotz eines konstruktiv bedingten Versatzes der Lasermissionsrichtung zu den Erfassungsrichtungen der Zielsuchkamera eine schnelle Ausrichtung des jeweiligen Strahls 17,21 erfolgen und eine durch die optischen Achsen der Kameras und den Laserstrahl 17,21 gegebene Parallaxe bestimmt werden. Im Speziellen kann der Laserstrahl 17,21 direkt, d.h. ohne einen iterativen Zwischenschritt, auf das Ziel 81 ausgerichtet werden.

Insbesondere kann - alternativ oder zusätzlich zur Bestimmung einer Grobposition des Reflektors 81 mittels der mit zwei Zielsuchkameras bestimmten Suchbildpositionen in zwei Suchbildern - aus den auf den Detektoren (an einem der Lasertracker 10,11) erfassten und abgebildeten Suchbildpositionen eine Grobentfernung zum Reflektor 81 bestimmt werden. Diese Bestimmung kann mittels allgemein gültiger geometrischer Grundsätze erfolgen, z.B. mittels des Höhensatzes für Dreiecke und/oder mittels Sinus- und/oder Kosinussatz.

Ausserdem kann eine derartige erfindungsgemässe Bereitstellung von Markierungen (für die Suchbildpositionen) mit dem Bild der Übersichtskamera auch bei Lasertrackern ohne Bilderfassungseinheit 15 zur Orientierungsbestimmung (6-DoF Kamera) eines Messhilfsinstruments 80 Anwendung finden (3D-Lasertracker).

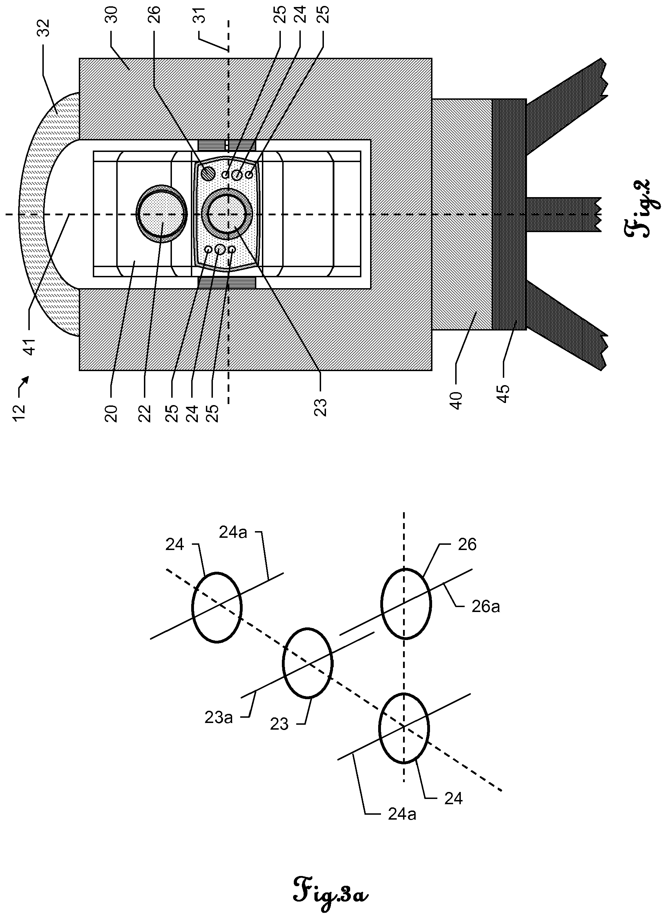

Figur 2 zeigt eine weitere Ausführungsform eines erfindungsgemässen Lasertrackers 12 mit einer Basis 40, die auf einem Stativ 45 angeordnet ist und eine Schwenkachse 41 definiert. Auf der Basis ist zudem eine eine Neigungsachse 31 (Kippachse) definierende, um die Schwenkachse 41 relativ zur Basis 40 schwenkbare Stütze 30 mit einem Griff 32 angeordnet. Weiters ist eine Anzieleinheit 20 vorgesehen, wobei diese Anzieleinheit 20 um die Neigungsachse 31 relativ zur Stütze 30 schwenkbar verbaut ist.

Die Anzieleinheit 20 weist ferner eine Variokamera mit einem Variokameraobjektiv 22 und eine Optik 23 auf, die einer in der Anzieleinheit 20 angeordneten Entfernungsmess- und Trackingeinheit zugeordnet ist, wobei vermittels der Optik 23 ein Messlaserstrahl von der Entfernungsmess- und Trackingeinheit zur präzisen Bestimmen einer Entfernung zu einem Ziel und zum Verfolgen des Ziels emittiert wird. Ausserdem sind an der Anzieleinheit 20 zwei Zielsuchkameras 24 mit jeweils einer Kameraoptik und mit jeweils einem positionssensitiven Detektor und zudem Beleuchtungsmittel 25, welche beispielsweise als LEDs ausgebildet sind und im Betrieb insbesondere Licht im Infrarotbereich emittieren, vorgesehen. Mit diesen Beleuchtungsmitteln 25 kann somit ein Ziel, z.B. ein Reflektor, beleuchtet bzw. angestrahlt werden und zumindest eine Teil der Strahlung durch den Reflektor in Richtung des Lasertrackers 12 bzw. in Richtung der Zielsuchkameras 24 zurückreflektiert werden. Das reflektierte Licht wird dann mit den Kameras 24 erfasst, vermittels der Kameraoptiken auf dem jeweiligen positionssensitiven Detektor abgebildet und die Position der Abbildung in einem Suchbild als jeweilige erste und zweite Suchbildposition identifiziert. Hieraus kann nun für jede dieser Suchbildpositionen unter Berücksichtigung der Ausrichtung der Detektoren jeweils eine Richtung zum Ziel und somit ein Versatz relativ zu einer Nullposition auf dem jeweiligen Detektor und/oder ein Richtungswinkel, insbesondere zwei Richtungswinkel für zwei Detektorachsen, z.B. für eine durch die Dimensionierung des Detektors vordefinierte X- und Y-Achse, bestimmt werden. Mittels dieser so erfassten Positionen des Ziels kann ein automatisiertes Auffinden des Ziels erfolgen. Das Auffinden des Ziels kann dabei insbesondere mittels Stereophotogrammetrie erfolgen.

In Abhängigkeit der mittels der zwei Detektoren bestimmten Richtungswinkeln kann dann anhand der bekannten relativen Positionierung der Zielsuchkameras 24 eine Grobposition des Ziels und/oder eine Grobentfernung zum Ziel, beispielsweise mittels einer mathematisch geometrischen Dreiecks-Konstruktion, grob bestimmt werden.

Die Zielsuchkameras 24 (mit Kameraoptiken und Detektoren) sind hierbei so angeordnet, dass die Sichtfelder der Kameras 24 sich zumindest teilweise überlappen (überschneiden) und das Ziel (oder mehrere Ziele) somit in den Sichtfeldern beider Zielsuchkameras 24 erfassbar ist, insbesondere mit beiden Kameras 24 gleichzeitig erfassbar ist. Dabei kann die erste Kamera z.B. ein grosses Sichtfeld aufweisen, wobei die zweite Kamera ein Sichtfeld aufweisen kann, welches vergleichsweise kleiner ist. Somit können zum einen ein grosser Bereich (mittels der ersten Kamera) erfasst und zugleich eine hohe Genauigkeit bei der Suchbildpositionsbestimmung (mittels der zweiten Kamera) realisiert werden. Alternativ können beide Zielsuchkameras 24 ein grosses Sichtfeld aufweisen, damit ein möglichst grosser Überlappungsbereich generierbar ist (bei geringerer Messgenauigkeit), oder beide Kameras 24 mit einem engen Sichtfeld ausgeführt sein, damit eine gesteigerte Genauigkeit bei der Grobpositionsbestimmung erreicht wird (bei kleinerem Überlappungsbereich und damit kleinerem Messbereich).

Ferner weist der Lasertracker 12 eine Übersichtskamera 26 auf, welche in einem bekannten Positionsverhältnis zu den beiden Zielsuchkameras 24 platziert ist. Das Sichtfeld der Übersichtskamera 26 (Übersichtssichtfeld) ist in dieser Ausführungsform derart ausgebildet, dass beide Sichtfelder der Zielsuchkameras 24 mit dem Übersichtssichtfeld in einem gemeinsamen Bereich überlappen, sodass ein mit beiden Zielsuchkameras 24 erfassbares Ziel auch mit der Übersichtskamera 26 erfasst werden kann, insbesondere simultan. Die mit einer Zielsuchkamera 24 detektierten Suchbildpositionen können mit denjenigen mit der zweiten Kamera 24 detektierten Suchbildpositionen verglichen und/oder derart gruppiert werden, dass diejenigen Suchbildpositionen, die mit beiden Kameras 24 für gemeinsame Ziels erfasst wurden, jeweils einander zugeordnet und im Weitern als Suchbildpositionen für ein gemeinsames Ziel weiterbehandelt werden. Insbesondere kann daraus eine gemeinsame Suchbildposition für das gemeinsame Ziel abgeleitet werden.

Durch die bekannte Positionierung der Zielsuchkameras 24 und der Übersichtskamera 26 an der Anzieleinheit 20 kann allgemein in Abhängigkeit der Suchbildpositionen ein Einfügen von graphischen Markierungen in das Übersichtsbild erfolgen, welche die Suchbildpositionen angeben und somit die Ziele repräsentieren. Im Speziellen kann eine Übertragung der mittels der Zielsuchkameras 25 bestimmten Suchbildposition in ein durch die Übersichtskamera 26 definiertes Koordinatensystem erfolgen. Hierzu kann ferner das Positions- und Ausrichtungsverhältnis der Kameras zueinander berücksichtigt werden. Insbesondere kann das Einfügen der Suchbildposition ins Übersichtsbild in Abhängigkeit der bestimmten Grobentfernung zum Ziel erfolgen. Das Übertragen bzw. Einfügen der Suchbildpositionen kann dabei beispielsweise mittels Koordinatentransformation erfolgen, wobei die Koordinaten der durch den positionssensitiven Detektor in einem Zielsuchkoordinatensystem festgelegten Suchbildposition in Abhängigkeit einer relativen Ausrichtung und Lage des Zielsuchkoordinatensystem zu einem Übersichtskoordinatensystem der Übersichtskamera 26 in Koordinaten des Übersichtskoordinatensystems transformiert werden.

Auf Basis einer derartigen graphischen Überlagerung der Suchbildpositionen mit dem Übersichtsbild kann ein Bild von erfassten Objekten und zusätzlich im Bild dargestellten und positionsmässig an der korrekten Stelle im Bild verzeichneten Zielen - repräsentiert durch z.B. von Zieltyp abhängige Markierungen - ausgegeben werden. Dadurch kann eine "Point&Click"-Funktionalität bereitgestellt werden, in deren Rahmen durch ein Auswählen eines im Bild angezeigten gewünschten Ziels (aus einer Menge von Zielen) der Messstrahl des Trackers 12 auf dieses Ziel ausgerichtet wird und wobei der Strahl an das Ziel angekoppelt und dieses verfolgt werden kann. Insbesondere kann das Ziel auf einem berührungssensitiven Display, auf dem das Bild ausgegeben wird, z.B. durch Antippen einer Markierung ausgewählt werden.

Nachdem der Laserstrahl auf einen Reflektor (Retroreflektor) z.B. mittels der "Point&Click"-Funktionalität ausgerichtet ist und von diesem zurückreflektiert wird, kann mittels einer Feindistanzmesseinheit im Lasertracker 12 bzw. in der Anzieleinheit 20 eine präzise Entfernung zum Reflektor bestimmt werden. Ferner kann der Laserstahl dann an den Reflektor angekoppelt werden und der Reflektor mit dem Strahl verfolgt werden. Hierfür werden auf einem weiteren, dem Strahlengang der Messstrahlung zugeordneten Positionssensor eine Position des reflektierten Messstrahls auf dem Sensor und eine Ablage der auftreffenden Strahlung bezüglich einer Nullpunktposition bestimmt. Mittels dieser Ablage, welche auf dem Sensor in zwei Richtungen bestimmbar ist, kann eine Positionsänderung des Reflektors detektiert und der Laserstrahl entsprechend dieser Änderung nachgeführt und somit fortlaufend der Reflektor angezielt werden.

In der gezeigten Ausführungsform sind die Zielsuchkameras 24 und die Übersichtskamera 26 derart an der Anzieleinheit 20 angeordnet, dass deren Erfassungsrichtungen weder in einer Ebene, die durch die Schwenkachse 41 und den Mittelpunkt der Optik 23 definiert ist, noch in einer Ebene, die durch die Neigungsachse 31 und den Mittelpunkt der Optik 23 definiert ist, liegen, jedoch kann zumindest eine der Kameras in einer alternativen Ausführungsform in einer der entsprechenden Ebenen angeordnet sein.

Die derartige Anordnung der Kameras 24,26 und das erfindungsgemässe Zielbereitstellen bieten eine Vereinfachung hinsichtlich der Geräteauslegung, eine verbesserte Kompaktheit des Systems, eine höhere Genauigkeit für die Zielfindung, bessere Bildqualität des Übersichtsbilds und einen reduzierten Energieverbrauch des Geräts. Zudem können spezielle IR-Filter (Infrarotfilter) zur optimalen Farbreproduktion für die Übersichtskamera 26 eingesetzt werden. Ferner bietet der Einsatz von selektiven IR-Bandfiltern für die Zielsuchkameras 24 eine erhöhte Robustheit und Verlässlichkeit des ATR-System.

In einer speziellen Ausführungsform eines erfindungsgemässen Lasertrackers kann das reflektierte Beleuchtungslicht (Beleuchtungsstrahlungsreflexe) mit mindestens drei Zielsuchkameras detektiert und somit drei Suchbildpositionen auf drei positionssensitiven Detektoren und entsprechende Richtungswinkel bestimmt werden. Eine Bestimmung der Grobentfernung zu einem Ziel ergibt sich dann in Abhängigkeit der abgebildeten drei Suchbildpositionen auf den Detektoren.

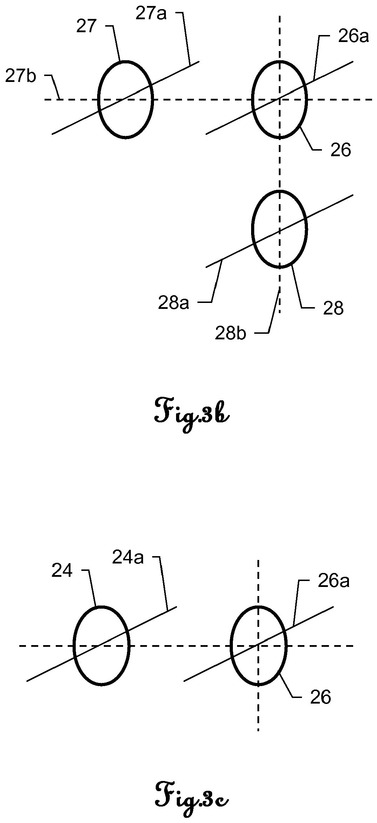

Die Figuren 3a,3b zeigen jeweils eine Ausführungsform für eine Anordnung von Zielsuchkameras 24 und einer Übersichtskamera 26 an einem erfindungsgemässen Lasertracker. In Figur 3a sind zwei Zielsuchkameras 24 mit jeweiligen optischen Achsen 24a, eine Übersichtskamera 26 mit deren optischer Achse 26a und ein Objektiv 23 einer Teleskopeinheit mit einer Messachse 23a gezeigt. Die optischen Achsen 24a,26a sind dabei parallel zueinander ausgerichtet und mit einem definierten Versatz zur Messachse 23a angeordnet. Die Zielsuchkameras 24 sind ferner auf einer gemeinsamen Verbindungslinie durch die Messachse 23a platziert, wobei die Brennweiten der beiden Zielsuchkameras 24 identisch sind.

Mit den beiden Zielsuchkameras 24 können mittels einer aktiven Beleuchtung reflektierende Objekte, wie z.B. Retroreflektoren, identifiziert werden. Dabei können die jeweils individuell mit den einzelnen Kameras 24 erfassten Ziele gruppiert werden, sodass individuell mittels beider Kameras 24 bestimmte Suchbildpositionen eines bestimmten Ziels einander zugeordnet und verknüpft werden. Im Folgenden kann eine Grobentfernung zu jedem der erfassten Reflexe, beispielsweise mittels Triangulation bezüglich der beiden Zielsuchkameras 24, bestimmt werden. In Abhängigkeit einer daraus ableitbaren Positions- und Entfernungsinformation kann jedes identifizierte reflektierende Ziel bzw. dessen so bestimmbare Position bezüglich der Zielsuchkameras 24 in ein Übersichtsbild der Übersichtskamera 26 übertragen werden. Hierfür kann ein Versatz der Zielsuchkameras 24 zu der Übersichtskamera 26 berücksichtigt werden. Ferner kann das Ziel nun, insbesondere eine ungefähre Form und/oder räumliche Ausdehnung des Ziels, in ein mit der Übersichtskamera erfasstes visuelles Bild an die übertragene Position (im Übersichtsbild) projiziert werden, wobei das Ziel durch eine Markierung im Übersichtsbild angegeben wird. Insbesondere kann das so dargestellte Ziel im Übersichtsbild periodisch angezeigt werden, sodass das Ziel im Bild blinkend erscheint.

Figur 3b zeigt eine alternative Anordnung zweier Zielsuchkameras 27,28 (ATR-Kameras) und einer Übersichtskamera 26 und deren optischer Achsen 26a,27a,28a. Die Kameras 26,27,28 weisen hierbei identische Brennweiten auf. Ausserdem ist die Zielsuchkamera 27 auf einer Ebene zusammen mit der Übersichtskamera 26 derart angeordnet, dass die Kameras 26,27 eine gemeinsame X-Achse 27b aufwiesen, wobei diese X-Achse 27b jeweils die optische Achse 27a der Zielsuchkamera 27 und die optische Achse 26a der Übersichtskamera 26 schneidet. Ferner ist die Zielsuchkamera 28 auf einer Ebene zusammen mit der Übersichtskamera 26 derart angeordnet, dass die Kameras 26,28 eine gemeinsame Y-Achse 28b aufwiesen, wobei die Y-Achse 28b jeweils die optische Achse 28a der Zielsuchkamera 28 und die optische Achse 26a der Übersichtskamera 26 schneidet. Die X-Achse 27b und die Y-Achse 28b stehen hierbei orthogonal zueinander.

Durch eine solche Anordnung kann ein mit einer der Zielsuchkameras 27,28 erfasstes Suchbild mit detektierten Suchbildpositionen von reflektierenden Zielen direkt mit einem Übersichtsbild der Übersichtskamera 26 verknüpft werden, wobei die Suchbildpositionen der mit der Zielsuchkamera 27 detektieren Ziele in Abhängigkeit der X-Achse 27b der Zielsuchkamera 27 und die Suchbildpositionen der mit der Zielsuchkamera 28 detektieren Ziele in Abhängigkeit der Y-Achse 28b der Zielsuchkamera 28 in das Übersichtsbild projiziert werden können. Insbesondere können sowohl mit der Zielsuchkamera 27 als auch mit der Zielsuchkamera 28 erfasste Suchbildpositionen und/oder Suchbildpositionen, welche aus einer Zusammenschau der Detektierten Ziele beider Zielsuchkameras 27,28 abgeleitet sind, auf diese Weise in das Übersichtsbild in Form von Markierungen eingefügt werden und in diesem positionsgetreu angezeigt werden. Eine derartige Projektion bzw. Überlagerung der Suchbildpositionen mit dem Übersichtsbild kann ohne eine vorangehende Bestimmung einer Grobentfernung zum Ziel erfolgen.

Figur 3c zeigt eine weiter Ausführungsform für die Anordnung einer Zielsuchkamera 24 (ATR-Kamera) und einer Übersichtskamera 26 und deren optischer Achsen 24a,26a. Die Kameras 24,26 weisen hierbei wiederum identische Brennweiten auf. Mit dieser Anordnung können die mittels des positionssensitiven Detektors der Zielsuchkamera 24 identifizierten Suchbildpositionen im Übersichtsbild der Übersichtskamera 26 (durch eine Projektion) durch Markierungen angegeben werden. Die Markierungen im Übersichtsbild werden dabei in Abhängigkeit der Suchbildpositionen im Suchbild dargestellt. Eine bekannte Positions- und Ausrichtungsrelation zwischen Zielsuchkamera 24 und Übersichtskamera 26 kann dabei zusätzlich berücksichtigt werden.

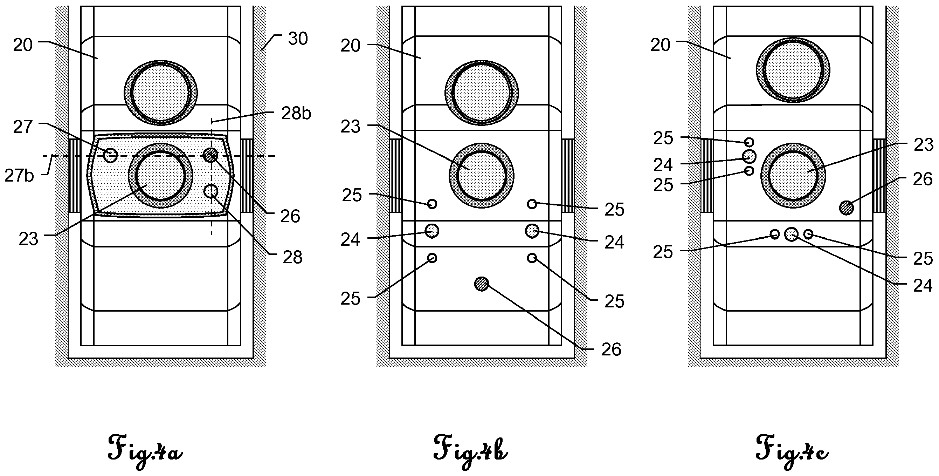

Die Figuren 4a-d zeigen jeweils eine Ausführungsform einer Anzieleinheit 20 eines erfindungsgemässen Lasertrackers mit Zielsuchkameras 24,27,28 und jeweils einer Übersichtskamera 26.

Figur 4a zeigt eine Ausführungsform einer Anzieleinheit 20, welche relativ zu einer Stütze 30 schwenkbar ist und eine Teleskopeinheit mit einem Teleskopobjektiv 23 aufweist. Die Zielsuchkameras 27,28 und die Übersichtskamera 26 sind hier gemäss der in Figur 3b gezeigten Anordnung an der Anzieleinheit 20 lokalisiert, wobei die X-Achse 27b und die Y-Achse 28b jeweils die optische Achse der Übersichtskamera 26 und die jeweilige optische Achse einer der Zielsuchkameras 27,28 schneiden. Dabei kann ein Anzeigen eines Übersichtsbilds mit erkannten Zielen auf einem Display, z.B. an einer Steuerungseinheit für den Lasertracker, erfolgen (nachdem die mit den Zielsuchkameras 27,28 erfassten Suchbildpositionen in das Übersichtsbild übertragen wurden) und ein gewünschtes Ziel kann ausgewählt werden. Das so wählbare Ziel kann dann mittels eines automatischen Schwenkens der Anzieleinheit 20 relativ zur Stütze 30 und eines Schwenkens der Stütze 30 relativ zu einer Basis, auf der die Stütze angeordnet ist, mit einem in der Teleskopeinheit erzeugten Messstrahl angezielt werden. Hierfür kann ein präzises Auffinden des Ziels vermittels der beiden Zielsuchkameras 27,28 mit jeweiligem positionssensitivem Detektor erfolgen. Eine derartige Zielfindung ist beispielsweise in der europäischen Patentanmeldung Nr. 11192216.7 beschrieben.

Figur 4b zeigt ebenfalls zwei Zielsuchkameras 24, welche versetzt unterhalb der Optik 23 angeordnet sind, und vier Beleuchtungsmittel 25, die zur Beleuchtung des Ziels dienen. Die Beleuchtungsmittel 25 sind hier jeweils symmetrisch um die jeweilige Kamera 24 angeordnet. Mittels der Beleuchtungsmittel 25 kann ein Reflektor beleuchtet und die durch den Reflektor erzeugten Beleuchtungsstrahlungsreflexe mit den beiden Zielsuchkameras 24 derart erfasst werden, dass der Reflektor auf positionssensitiven Detektoren der Zielsuchkameras 24 abgebildet und die Position dieser Abbildung als Suchbildposition in einem mit dem Detektor erfassbaren Suchbild bestimmt wird. Zudem kann ein Übersichtsbild mit der Übersichtskamera 26 erfasst werden, wobei der Reflektor im Sichtbereich der Übersichtskamera 26 liegt und somit auf dem Übersichtbild erfasst ist. Die Zielsuchkameras 24 und die Übersichtskamera 26 sind somit derart an der Anzieleinheit angeordnet, dass deren Sichtfelder überlappen.

Durch die so detektierten Suchbildpositionen für den Reflektor (jeweils eine Suchbildposition mit einer Zielsuchkamera) kann eine Grobentfernung zum Reflektor bestimmt werden, insbesondere wobei die Grobentfernung nach allgemein bekannten Prinzipien der Photogrammetrie bestimmt werden kann. Darüber hinaus oder alternativ kann unter Berücksichtigung einer aus einer Suchbildposition ableitbaren Richtung zum Ziel (d.h. eine Winkelbestimmung) eine Grobposition des Reflektors berechnet werden.

In Abhängigkeit der Positionierung der Kameras 24,26 an der Anzieleinheit 20 und in Abhängigkeit der bestimmten Grobentfernung bzw. Grobposition können die durch die positionssensitiven Detektoren bestimmbaren Koordinaten des Reflektors in das Übersichtsbild eingefügt bzw. damit überlagert werden, wobei die Koordinaten im Übersichtsbild, insbesondere als graphische Markierungen, bereitgestellt werden können. Damit ist die mit den Zielsuchkameras 24 detektierte Position des Reflektors im Übersichtsbild überlagert und kann zusammen mit einer den Reflektor repräsentierenden Markierung im Bild grafisch ausgegeben werden. Die Position der Markierung im Bild entspricht dabei derjenigen Position, an der sich der Reflektor in der darin erfassten Messumgebung tatsächlich befindet.

Die Figur 4c zeigt eine weitere erfindungsgemässe Ausführungsform der Anzieleinheit 20 mit zwei Zielsuchkameras 24, welchen jeweils zwei Beleuchtungsmittel 25 zur Beleuchtung eines Ziels zugeordnet sind. Die Kamera-Beleuchtungsmittel-Kombinationen sind hierbei asymmetrisch um die Teleskopoptik 23 angeordnet sind. Eine erste dieser Kombinationen ist seitlich und die zweite unterhalb der Teleskopoptik 23 angeordnet. Zudem ist wiederum eine Übersichtskamera 26 an der Anzieleinheit 20 mit einem definierten und bekannten Positions- und Ausrichtungsverhältnis zu den Zielsuchkameras 24 angeordnet. Die optischen Achsen der Kameras 24,26 sind hierbei jeweils leicht gewinkelt zueinander ausgerichtet, jedoch überlappen deren jeweilige Sichtfelder in einem gemeinsamen Sichtbereich. In einer alternativen Ausführungsform können die optischen Achsen jeweils parallel zueinander ausgerichtet sein.

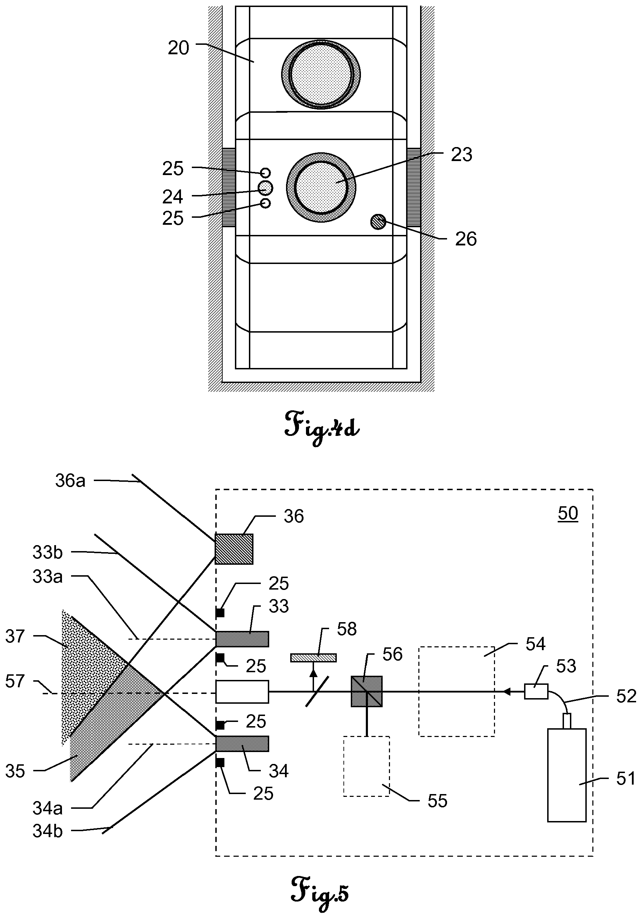

Die Figur 4d zeigt eine weitere erfindungsgemässe Ausführungsform der Anzieleinheit 20 mit einer Zielsuchkamera 24, welcher zwei Beleuchtungsmittel 25 zur Beleuchtung eines Ziels zugeordnet sind, und einer Übersichtskamera 26. Die Kamera-Beleuchtungsmittel-Kombinationen sind hierbei neben der Teleskopoptik 23 angeordnet.

Figur 5 zeigt eine Ausführungsform eines optischen Aufbaus eines erfindungsgemässen Lasertrackers. Eine optische Einheit 50 des Lasertrackers weist dabei eine Laserstrahlquelle 51 - beispielsweise eine HeNe-Laserquelle oder eine Laserdiode - und einen Kollimator 53 zur Einkopplung der mit der Strahlquelle 51 erzeugten Laserstrahlung in den Messstrahlengang auf. Die Strahlung wird im gezeigten Aufbau mittels einer optischen Faser 52 von der Laserstrahlquelle 51 zum Kollimator 53 geführt, kann aber alternativ auch direkt oder durch optische Umlenkmittel in den Messstrahlengang eingekoppelt werden. Die optische Einheit 50 verfügt zudem über eine Interferometereinheit 54 mittels derer Entfernungsänderungen zum Ziel detektiert und gemessen werden können. Die mit der Strahlquelle 51 erzeugte Strahlung wird als Messstrahlung für das Interferometer 54 benutzt, im Interferometer 54 in einen Referenzpfad und Messpfad aufgespaltet und nach Reflexion des Messstrahls am Ziel zusammen mit dem Referenzstrahl an einem Detektor detektiert. Ausserdem ist eine Absolutdistanzmesseinheit 55 mit einer weiteren Strahlquelle und einem weiteren Detektor vorgesehen. Diese Einheit 55 dient zur Distanzbestimmung zum Ziel, wobei die damit erzeugte Strahlung vermittels eines Strahlteilers 56 zusammen mit der Interferometerstrahlung auf einen gemeinsamen Messstrahlengang geführt wird. Die Anordnung der optischen Bauteile und die Führung der Messstrahlung in der optischen Einheit 50 definieren eine Messrichtung bzw. eine optische Messachse 57. Für eine präzise Bestimmung einer Entfernung zum Ziel können Messwerte von sowohl Absolutdistanzmesser 55 und Interferometer 54 berücksichtigt und insbesondere verknüpft werden. In einer speziellen Ausführungsform eines Lasertrackers können Absolutdistanzmesser 55 und Interferometer 54 unterschiedliche Messstrahlengänge definieren und/oder baulich separiert, insbesondere in unterschiedlichen Messgruppen, angeordnet sein.

Zudem ist in der optischen Einheit 50 ein positionssensitiver Detektor 58 (Tracking-Flächensensor, insbesondere PSD) derart angeordnet, dass am Ziel reflektierte Messlaserstrahlung auf diesem detektiert werden kann. Mittels dieser PSD 58 kann eine Ablage des Auftreffpunkts des erfassten Strahls von einem Servokontroll-Nullpunkt bestimmt und auf Basis der Ablage ein Nachführen des Laserstahls auf das Ziel erfolgen. Zu diesem Zweck und zum Erreichen einer hohen Genauigkeit ist das Sichtfeld dieser PSD 58 vergleichsweise klein, d.h. korrespondierend zum Strahldurchmesser des Messlaserstrahls, gewählt. Eine Erfassung mit der PSD 58 erfolgt koaxial zur Messachse 57, sodass die Erfassungsrichtung der PSD 58 der Messrichtung entspricht. Die Anwendung des PSD-basierten Trackings und der Feinanzielung kann erst erfolgen, nachdem der Messlaser auf ein retro-reflektierende Ziel ausgerichtet worden ist (zumindest grob, d.h. derart, dass das Ziel innerhalb des Messlaser-Kegels liegt).

Die optische Einheit 50 weist ferner zwei Zielsuchkameras 33,34 (ATR-Kameras) mit einer jeweiligen optischen Achse 33a,34a bzw. Erfassungsrichtung und Beleuchtungsmittel 25 auf. Des Weiteren definiert jede der Kameras 33,34 ein Zielsuchsichtfeld 33b,34b wobei die Zielsuchkameras 33,34 derart angeordnet sind, dass die Sichtfelder 33b,34b überlappen und somit ein ATR-Überlappungsbereich 35 festgelegt ist.

Mittels der Beleuchtungsmittel 25 kann elektromagnetische Strahlung zur Beleuchtung des Ziels emittiert werden. Wird diese Strahlung am Ziel reflektiert und zumindest teilweise in Richtung der beiden Zielsuchkameras 33,34 reflektiert, kann die reflektierte Beleuchtungsstrahlung (Beleuchtungsstrahlungsreflex) mit beiden Zielsuchkameras 33,34 in jeweils einem Suchbild als Suchbildposition erfasst werden. Durch die derartige Anordnung der Zielsuchkameras 33,34, dass ein ATR-Überlappungsbereich 35 vorliegt, kann das Ziel in diesem Bereich 35 mit beiden Zielsuchkameras 33,34 erfasst werden und eine Grobentfernung zum Ziel und/oder eine Grobposition des Ziels bestimmt werden.

Weiters ist an der optischen Einheit 50 eine Übersichtskamera 36 mit einem Übersichtssichtfeld 36a vorgesehen. Dabei ist die Übersichtskamera 36 so angeordnet, dass das Übersichtssichtfeld 36a jeweils mit den Zielsuchsichtfeldern 33b,34b überlappt und dadurch ein gemeinsamer Überlappungsbereich 37 definiert wird. Durch die gezeigte Anordnung der Kameras 33,34,36 und derer Sichtfelder 33b,34b,36a kann ein erfindungsgemässes Referenzieren der mit den Zielsuchkameras 33,34 erfassbaren Suchbildpositionen in einem mit der Übersichtskamera 36 erfassbaren Übersichtsbild erfolgen.

In einer speziellen Ausführungsform (hier nicht gezeigt) können erfindungsgemäss die Zielsuchkameras 33,34 derart angeordnet sein, dass deren optische Achsen 33a,34a jeweils parallel versetzt oder in einem definierten Winkel relativ zur Messachse 57 angeordnet sind.

In einer weiteren speziellen Ausführungsform (nicht gezeigt) ist eine (gewinkelter) Anordnung der optischen Achsen 33a,34a relativ zur Messachse in der Art realisierbar, dass die optischen Achsen 33a,34a jeweils schielend zueinander ausgerichtet sind oder zur Messachse 57 "hinschielend" oder von dieser "wegschielend" ausgerichtet sind, und somit nicht parallel zur Messachse 57 verlaufen. Eine solche Anordnung kann beispielsweise für das Erzeugen eines relativ grossen Überlappungsbereichs der Sichtfelder 33b,34b oder um ein möglichst grosses Gesamtsichtfeld zu generieren vorgesehen sein.

In einer weiteren speziellen Ausführungsform (ebenfalls nicht gezeigt) können die Zielsuchkameras 33,34 und die Messachse 57 derart angeordnet sein, dass zumindest eine der optischen Achsen 33a,34a der Zielsuchkameras 33,34 koaxial, d.h. nicht versetzt, zur Messachse 57 angeordnet ist.

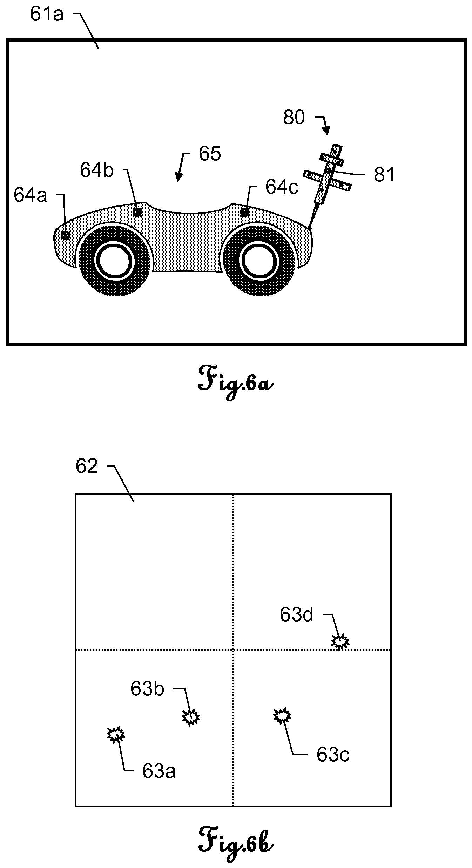

Die Figuren 6a-c zeigen Übersichtsbilder 61a,61b, mit mindestens einer Zielsuchkamera erfasste Suchbildpositionen 63a-d und eine Darstellung der in das Übersichtsbild 61b eingefügten Suchbildpositionen 63a-d. Eine Übersichtskamera zur Erzeugung des Übersichtsbilds 61a und die mindestens eine Zielsuchkamera sind hierbei an einem erfindungsgemässen Lasertracker angeordnet.

Im Übersichtsbild 61a gemäss Figur 6a ist ein Objekt 65, z.B. ein Automobil, erfasst, an welchem reflektierende Markierungen 64a,64b,64c, z.B. verkörpert durch eine reflektierende Folie, angebracht sind. Zudem ist ein Messhilfsinstrument 80 mit einem Reflektor 81 erfasst. Das Übersichtsbild 61a kann auf einer grafischen Anzeigeeinheit an dem Lasertracker oder einer Steuerungseinheit für den Tracker grafisch dargestellt werden. Allein auf Grundlage eines so erfassten Übersichtsbildes können die reflektierenden Markierungen 64a,64b,64c oder der Reflektor 81, z.B. bei grossen Entfernungen, allfällig nicht positionsgenau identifiziert werden und der Messlaserstrahl des Trackers somit nicht genau darauf ausgerichtet werden. Ausserdem kann aufgrund der Auswahl zumindest vierer möglicher reflektierender Ziele 64a,64b,64c,81 ein automatisches Ausrichten des Lasers auf das eine gewünschte Ziel nicht verlässlich ausgeführt werden.

Figur 6b zeigt ein mit der mindestens einen Zielsuchkamera des Lasertrackers erzeugtes Suchbild 62 mit Suchbildpositionen 63a-d, die mittels eines positionssensitiven Detektors der Zielsuchkamera erfasst und bestimmt wurden. Hierfür wird das Sichtfeld der Zielsuchkamera mit einer definierten Beleuchtungsstrahlung beleuchtet und die reflektierte Strahlung durch die Zielsuchkamera erfasst, auf den Detektor abgebildet und das Suchbild 62 mit Suchbildpositionen 63a-d erfasst. Das Suchbild 62 wird zur positionsabhängigen Identifikation von Zielen erfasst und ermöglicht - im Unterschied zu einer Übersichtskamera - typischerweise kein Erfassen von spektralen, den visuellen Spektralbereich umfassenden Bildern und/oder Farbbildern.

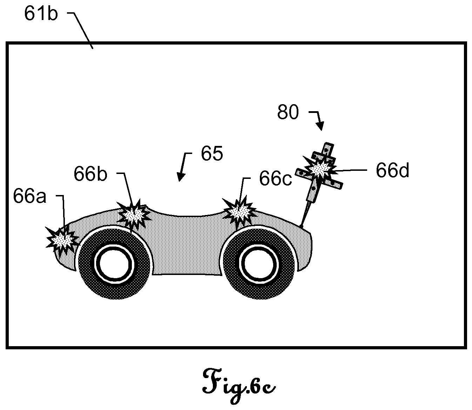

Figur 6c zeigt ein Übersichtsbild 61b mit dem erfassten Objekt 65 und dem Messhilfsinstrument 80, wobei in dem Bild 61b mittels Bildverarbeitung und in Abhängigkeit von den Suchbildpositionen 63a-d im Suchbild 62 Markierungen 66a-d angezeigt werden, die die Suchbildpositionen 63a-d des Suchbildes 62 angeben. Die erfindungsgemässe Zielbereitstellungsfunktionalität stellt dabei im Sinne einer Zielanzeige eine positionstreue Übertragung der Suchbildpositionen 63a-d in Form von graphischen Markierungen 66a-d in das Übersichtsbild 61b bereit. Durch diese Darstellung kann nun z.B. eine der Markierungen 66a-d ausgewählt werden, insbesondere durch einen Benutzer, und dadurch das jeweilige Ziel bzw. die jeweilige Suchbildposition 63a-d selektiert und angemessen werden. Ausserdem kann beispielsweise eine Messreihenfolge festgelegt werden, in der die Ziele angezielt und vermessen werden sollen. So können z.B. zuerst das durch die Markierung 66b repräsentierte Ziel gemessen und anschliessend die Ziele der Markierungen 66a,66c,66d, derart angefahren werden, dass die Messstrahlung auf das jeweilige Ziel trifft, und vermessen werden.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren zur Zielidentifikation und mit gattungsgemässen Messgeräten, insbesondere Lasertrackern, des Stands der Technik kombiniert werden.

## Patentansprüche

1. Lasertracker (10,11,12) zur fortlaufenden Verfolgung eines reflektierenden Objekts und zur Positionsbestimmung des Objekts, mit
• einer eine Stehachse (41) definierenden Basis (40),
• einer Strahllenkeinheit zur Emission einer Messstrahlung (17,21) und zum Empfang von zumindest einem Teil der am Objekt reflektierten Messstrahlung (17,21), wobei
□ die Strahllenkeinheit um die Stehachse (41) und eine Neigungsachse (31) relativ zur Basis (40) motorisiert schwenkbar ist und
□ durch eine Emissionsrichtung der Messstrahlung (17,21) eine Messachse (57) definiert ist,
• einer Entfernungsmesseinheit zur präzisen Distanzbestimmung zum Objekt vermittels der Messstrahlung (17,21),
• einer Winkelmessfunktionalität zur Bestimmung einer Ausrichtung der Strahllenkeinheit relativ zur Basis (40),
• einer Zielsucheinheit mit
□ Beleuchtungsmitteln (25) zur Erzeugung elektromagnetischer Beleuchtungsstrahlung und
□ zumindest einer Zielsuchkamera (24,27,28,33,34) mit einem positionssensitiven Detektor, wobei
• die Zielsuchkamera (24,27,28,33,34) ein Zielsuchsichtfeld (33b,34b) definiert,
• das Zielsuchsichtfeld (33b,34b) mittels der Beleuchtungsmittel (25) beleuchtbar ist,
• mit der Zielsuchkamera (24,27,28,33,34) ein Suchbild (62) zur positionsabhängigen Identifikation von Zielen (64a-c,81) erfassbar ist und
• Positionen von im Suchbild (62) erfassten, jeweilige reflektierende Ziele (64a-c,81) repräsentierenden Beleuchtungsstrahlungsreflexen mittels des positionssensitiven Detektors identifizierbar und als Suchbildpositionen (63a-d) im Suchbild (62) bestimmbar sind,
• einer Übersichtskamera (26,36), wobei
□ ein Übersichtssichtfeld (36a) der Übersichtskamera (26,36) mit dem Zielsuchsichtfeld (33b,34b) überlappt,
□ mit der Übersichtskamera (26) ein zumindest teilweise den visuellen Spektralbereich wiedergebendes Übersichtsbild (61a,61b) erfassbar ist, und
□ die Zielsuchkamera (24,27,28,33,34) und die Übersichtskamera (26,36) in bekannter Positions- und Ausrichtungsrelation relativ zueinander angeordnet sind, und
• einer Verarbeitungseinheit,
**dadurch gekennzeichnet, dass**
der Lasertracker (10,11,12) eine Zielbereitstellungsfunktionalität aufweist, wobei bei Ausführung der Zielbereitstellungsfunktionalität durch die Verarbeitungseinheit in Abhängigkeit von den Suchbildpositionen (63a-d) und unter Berücksichtigung der Positions- und Ausrichtungsrelation mittels Bildverarbeitung graphische, die Ziele (64a-c,81) im Übersichtsbild (61a,61b) repräsentierende Markierungen (66a-d) in das Übersichtsbild (61a,61b) eingefügt werden,
wobei die Beleuchtungsstrahlung einen definierten infraroten Beleuchtungswellenlängenbereich aufweist und die Zielsuchkamera (24,27,28,33,34) zur Erfassung dieser Strahlung schmalbandig in einem Bereich, welcher den definierten Beleuchtungswellenlängenbereich beinhaltet, ausgebildet ist.

2. Lasertracker (10,11,12) nach Anspruch 1,
**dadurch gekennzeichnet, dass**
die Zielsuchkamera (24,27,28,33,34) mit deren optischer Achse (24a,27a,28a,33a,34a) versetzt zur Messachse (57) angeordnet ist.

3. Lasertracker (10,11,12) nach einem der Ansprüche 1 bis 2,
**dadurch gekennzeichnet, dass**
in Abhängigkeit von den im Suchbild (62) erfassten Beleuchtungsstrahlungsreflexen eine Form und insbesondere eine räumliche Ausdehnung der Ziele (64a-c,81) bestimmbar sind und die Markierungen (66a-d) im Übersichtsbild (61a,61b) in Abhängigkeit von der Form und insbesondere der räumlichen Ausdehnung darstellbar sind.

4. Lasertracker (10,11,12) nach einem der Ansprüche 1 bis 3,
**dadurch gekennzeichnet, dass**
die Zielsuchkamera (24,27,28,33,34) und die Übersichtskamera (26,36) definierte Brennweiten aufweisen, insbesondere identische, insbesondere konstante,
und/oder
die Zielsuchkamera (24,27,28,33,34) derart angeordnet ist, dass deren optische Achse (24a,27a,28a,33a,34a) versetzt zur optischen Achse (26a) der Übersichtskamera (26,36) angeordnet ist, insbesondere parallel versetzt.

5. Lasertracker (10,11,12) nach einem der Ansprüche 1 bis 4,
**dadurch gekennzeichnet, dass**
die Zielsucheinheit eine weitere oder mehrere weitere Zielsuchkameras (24,27,28,33,34) mit jeweils einem positionssensitiven Detektor und jeweils einem Zielsuchsichtfeld (33b,34b) aufweist, insbesondere wobei die eine weitere oder mehreren weiteren Zielsuchkameras (24,27,28,33,34) zur Erfassung elektromagnetischer Strahlung im Bereich um den Beleuchtungswellenlängenbereich ausgebildet sind.

6. Lasertracker (10,11,12) nach Anspruch 5,
**dadurch gekennzeichnet, dass**
die Zielsuchkameras (24,27,28,33,34) jeweils mit bekannter und fixer Positions- und Ausrichtungsrelation relativ zueinander und relativ zur Übersichtskamera (26,36) derart angeordnet sind, dass
• die Zielsuchsichtfelder (33b,34b) der Zielsuchkameras (24,27,28,33,34) überlappen, insbesondere in einem gemeinsamen Sichtbereich (37) mit dem Übersichtssichtfeld (36a) überlappen, und
• deren optische Achsen (24a,27a,28a,33a,34a) jeweils versetzt zur Messachse (57) angeordnet sind.

7. Lasertracker (10,11,12) nach Anspruch 5 oder 6,
**dadurch gekennzeichnet, dass**
mit jeder der Zielsuchkameras (24,27,28,33,34) jeweils ein Suchbild (62) mit Suchbildpositionen (63a-d) erfassbar ist und jeweilige ein gemeinsames Ziel repräsentierende Suchbildpositionen (63a-d) derart gruppierbar sind, dass Grobentfernungen zu den Zielen (64a-c,81) in Abhängigkeit der gruppierten Suchbildpositionen (63a-d) bestimmbar sind, insbesondere räumliche Grobpositionen der Ziele (64a-c,81), insbesondere wobei
• die Grobentfernungen mit jeweiligen Bildinformationen des Übersichtsbilds derart verknüpfbar sind, dass ein zumindest teilweise perspektivisches Umgebungsbild erzeugbar ist, indem Bildpunkte bzw. Bildbereiche im Übersichtsbild, welche positionsmässig mit den im Suchbild erfassten Suchbildpositionen korrespondieren, auf Basis der abgeleiteten Grobentfernungen plastisch dargestellt werden, und/oder
• im Rahmen der Zielbereitstellungsfunktionalität in Abhängigkeit von den Suchbildpositionen (63a-d) die graphischen Markierungen (66a-d) in das Übersichtsbild (61a,61b) bzw. in das zumindest teilweise perspektivische Umgebungsbild eingefügt werden, insbesondere wobei die Markierungen (66a-d) in Abhängigkeit von den Grobentfernungen eingefügt werden, insbesondere in Abhängigkeit von den Grobpositionen.

8. Lasertracker (10,11,12) nach einem der Ansprüche 1 bis 7,
**dadurch gekennzeichnet, dass**
der Lasertracker eine weitere oder mehrere weitere Übersichtskameras zur Erfassung von einem weiteren oder mehreren weiteren zumindest teilweise den visuellen Spektralbereich wiedergebenden Übersichtsbildern aufweist, wobei aus dem Übersichtsbild und dem einen weiteren oder den mehrere weiteren Übersichtsbildern ein perspektivisches Übersichtsbild erzeugbar ist und die Zielbereitstellungsfunktionalität derart konfiguriert ist, dass bei Ausführung der Zielbereitstellungsfunktionalität die graphischen Markierungen in das perspektivische Übersichtsbild eingefügt werden.

9. Lasertracker (10,11,12) nach einem der Ansprüche 1 bis 8,
**dadurch gekennzeichnet, dass**
der Lasertracker (10,11,12) aufweist
• eine um die Stehachse (41) relativ zur Basis (40) motorisiert schwenkbare und die Neigungsachse (31) definierende Stütze (30) und
• eine als Strahllenkeinheit ausgebildete, um die Neigungsachse (31) relativ zur Stütze (30) motorisiert schwenkbare Anzieleinheit (20) mit einer Teleskopeinheit zur Emission der Messstrahlung (17,21) und zum Empfang von zumindest einem Teil der am Ziel (64a-c,81) reflektierten Messstrahlung (17,21).

10. Lasertracker (10,11,12) nach einem der Ansprüche 1 bis 9,
**dadurch gekennzeichnet, dass**
die Zielbereitstellungsfunktionalität eine positionstreue Übertragung der Suchbildpositionen (63a-d) in das Übersichtsbild (61a,61b) bereitstellt und die Ziele (64a-c,81) mittels der graphischen Markierungen (66a-d) positionstreu im Übersichtsbild (61a,61b) anzeigbar sind.

11. System aus einem Lasertracker (10,11,12) nach einem der Ansprüche 1 bis 10 und einer Steuerungseinheit zur Steuerung des Lasertrackers (10,11,12),
**dadurch gekennzeichnet, dass**
die Steuerungseinheit eine Anzeigeeinheit zur grafischen Anzeige des Übersichtsbilds (61a,61b) und der Markierungen (66a-d) aufweist.

12. System nach Anspruch 11,
**dadurch gekennzeichnet, dass**
das System eine Auswahlfunktion aufweist, wobei
• im Rahmen der Auswahlfunktion eine gewünschte Markierung aus den in das Übersichtsbild (61a,61b) eingefügten Markierungen (66a-d) vermittels der Anzeigeeinheit auswählbar ist, insbesondere durch einen Benutzer,
und/oder
• mittels der Auswahlfunktion eine Messreihenfolge der durch die Markierungen (66a-d) repräsentierten Ziele (64a-c,81) definierbar ist, insbesondere wobei die Ziele (64a-c,81) in der Messreihenfolge nacheinander durch ein Ausrichten der Messstrahlung (17,21) auf die Ziele (64a-c,81) anzielbar und vermessbar sind.

13. Zielbereitstellungsverfahren zum Einfügen von graphischen Markierungen (66a-d) in ein Übersichtsbild (61a,61b) mit einem Lasertracker (10,11,12) aufweisend
• eine eine Stehachse (41) definierende Basis (40),
• eine Strahllenkeinheit zur Emission einer Messstrahlung (17,21) und zum Empfang von zumindest einem Teil der an einem Objekt (64a-c,81) reflektierten Messstrahlung (17,21), wobei die Strahllenkeinheit um die Stehachse und eine Neigungsachse (31) relativ zur Basis (40) motorisiert schwenkbar ist,
• eine Entfernungsmesseinheit zum präzisen Distanzbestimmen vermittels der Messstrahlung (17,21), und
• eine Winkelmessfunktionalität zum Bestimmen einer Ausrichtung der Strahllenkeinheit relativ zur Basis (40),
wobei im Rahmen des Zielbereitstellungsverfahrens erfolgen
• ein Beleuchten eines Zielsuchsichtfeldes (33b,34b) mit elektromagnetischer Beleuchtungsstrahlung,
• ein Erfassen eines Suchbilds (62) im Zielsuchsichtfeld (33b,34b) zum positionsabhängigen Identifizieren von Zielen (64a-c,81), wobei Positionen von reflektierende Ziele (64a-c,81) repräsentierenden Beleuchtungsstrahlungsreflexen mittels des positionssensitiven Detektors als Suchbildpositionen (63a-d) im Suchbild (62) identifiziert werden, und
• ein Erfassen des zumindest teilweise den visuellen Spektralbereich wiedergebenden Übersichtsbilds (61a,61b), wobei ein Übersichtssichtfeld (36a) definiert wird,
wobei
• das Übersichtssichtfeld (36a) mit dem Zielsuchsichtfeld (33b,34b) überlappt und
• ein Aufnehmen des Suchbilds (62) und ein Aufnehmen des Übersichtsbilds (61a,61b) von jeweils bekannter Position und in bekannter Ausrichtungsrelation erfolgt,
**dadurch gekennzeichnet, dass**
in Abhängigkeit von den Suchbildpositionen (63a-d) und unter Berücksichtigung der bekannten Positionen und Ausrichtungsrelation mittels Bildverarbeiten die graphischen, die Ziele (64a-c,81) im Übersichtsbild (61a,61b) repräsentierenden Markierungen (66a-d) in das Übersichtsbild (61a,61b) eingefügt werden,
wobei die Beleuchtungsstrahlung einen definierten infraroten Beleuchtungswellenlängenbereich aufweist und die Zielsuchkamera (24,27,28,33,34) zur Erfassung dieser Strahlung schmalbandig in einem Bereich, welcher den definierten Beleuchtungswellenlängenbereich beinhaltet, ausgebildet ist.

14. Zielbereitstellungsverfahren nach Anspruch 13,
**dadurch gekennzeichnet, dass**
• zumindest ein weiteres Erfassen eine Suchbilds (60) mit weiteren Suchbildpositionen (63a-d) von zumindest einer weiteren bekannten Position und in bekannter Ausrichtungsrelation erfolgt,
• jeweilige eine gemeinsames Ziel repräsentierende Suchbildpositionen (63a-d) gruppiert werden und Grobentfernungen zu den Zielen (64a-c,81) in Abhängigkeit der gruppierten Suchbildpositionen bestimmt werden, insbesondere räumliche Grobpositionen der Ziele (64a-c,81), und
• im Rahmen des Zielbereitstellungsverfahrens die Markierungen (66a-d)
□ in Abhängigkeit von den Suchbildpositionen (63a-d) in das Übersichtsbild (61a,61b) eingefügt werden, und/oder
□ in Abhängigkeit von den Grobentfernungen eingefügt werden, insbesondere in Abhängigkeit von den Grobpositionen.

15. Computerprogrammprodukt, das auf einem maschinenlesbaren Träger gespeichert ist, zur Steuerung
• des Beleuchtens des Zielsuchsichtfeldes (33b,34b),
• des Erfassens des Suchbilds (62) und
• des Erfassens des Übersichtsbilds (61a,61b),
und zur Ausführung
• des Einfügens der graphischen Markierungen (66a-d) in das Übersichtsbild (61a,61b) in Abhängigkeit von den Suchbildpositionen (63a-d) und unter Berücksichtigung der Positions- und Ausrichtungsrelation mittels Bildverarbeiten
des Zielbereitstellungsverfahrens nach Anspruch 13 oder 14, wenn das Computerprogrammprodukt auf einer Verarbeitungseinheit eines Lasertrackers (10,11,12) nach einem der Ansprüche 1 bis 10 ausgeführt wird.

## Claims

1. A laser tracker (10, 11, 12) for progressively tracking a reflective object and for determining the position of the object, having
- a base (40) defining a standing axis (41),
- a beam deflection unit for emitting measuring radiation (17, 21) and for receiving at least a part of the measuring radiation (17, 21) reflected on the object, wherein
- the beam deflection unit is pivotable by a motor about the standing axis (41) and an inclination axis (31) relative to the base (40) and
- a measuring axis (57) is defined by an emission direction of the measuring radiation (17, 21),
- a distance measuring unit for precisely determining the distance to the object by means of the measuring radiation (17, 21),
- an angle measuring functionality for determining an alignment of the beam deflection unit relative to the base (40),
- a target search unit having
- illumination means (25) for generating electromagnetic illumination radiation and
- at least one target search camera (24, 27, 28, 33, 34) having a position-sensitive detector, wherein
- the target search camera (24, 27, 28, 33, 34) defines a target search field of vision (33b, 34b),
- the target search field of vision (33b, 34b) can be illuminated by means of the illumination means (25),
- using the target search camera (24, 27, 28, 33, 34), a search image (62) can be acquired for the position-dependent identification of targets (64a-c, 81) and
- positions of illumination radiation reflections, which are acquired in the search image (62) and represent respective reflective targets (64a-c, 81), can be identified with the position-sensitive detector and determined as search image positions (63a-d) in the search image (62),
- an overview camera (26, 36), wherein
- an overview field of vision (36a) of the overview camera (26, 36) overlaps with the target search field of vision (33b, 34b),
- using the overview camera (26), an overview image (61a, 61b), which at least partially reproduces the visual spectral range, can be acquired, and
- the target search camera (24, 27, 28, 33, 34) and the overview camera (26, 36) are arranged in known position and alignment relationship relative to one another, and
- a processing unit,
**characterized in that** the laser tracker (10, 11, 12) has a target provision functionality, wherein upon execution of the target provision functionality by the processing unit, graphic markings (66a-d) are incorporated into the overview image (61a, 61b) by means of image processing as a function of the search image positions (63a-d) and whilst taking into account the position and alignment relationship, wherein the markings (66a-d) represent the targets (64a-c, 81) in the overview image (61a, 61b),
wherein the illumination radiation has a defined infrared illumination wavelength range, and the target search camera (24, 27, 28, 33, 34) is implemented to acquire this radiation in a narrowband range, which comprises the defined illumination wavelength range.

2. The laser tracker (10, 11, 12) as claimed in claim 1,
**characterized in that** the target search camera (24, 27, 28, 33, 34) is arranged having the optical axis thereof (24a, 27a, 28a, 33a, 34a) offset to the measuring axis (57).

3. The laser tracker (10, 11, 12) as claimed in any one of claims 1 to 2,
**characterized in that**, as a function of the illumination radiation reflections acquired in the search image (62), a shape and in particular a spatial extension of the targets (64a-c, 81) can be determined and the markings (66a-d) can be displayed in the overview image (61a, 61b) as a function of the shape and in particular the spatial extension.

4. The laser tracker (10, 11, 12) as claimed in any one of claims 1 to 3,
**characterized in that** the target search camera (24, 27, 28, 33, 34) and the overview camera (26, 36) have defined focal lengths, which are in particular identical, in particular constant,
and/or the target search camera (24, 27, 28, 33, 34) is arranged such that its optical axis (24a, 27a, 28a, 33a, 34a) is arranged offset to the optical axis (26a) of the overview camera (26, 36), in particular offset in parallel.

5. The laser tracker (10, 11, 12) as claimed in any one of claims 1 to 4,
**characterized in that** the target search unit has one further or multiple further target search cameras (24, 27, 28, 33, 34) having respectively a position-sensitive detector and respectively a target search field of vision (33b, 34b), in particular wherein the one further or multiple further target search cameras (24, 27, 28, 33, 34) are implemented to acquire electromagnetic radiation in the range around the illumination wavelength range.

6. The laser tracker (10, 11, 12) as claimed in claim 5,
**characterized in that** the target search cameras (24, 27, 28, 33, 34) are respectively arranged with known and fixed position and alignment relationship relative to one another and relative to the overview camera (26, 36) such that
- the target search fields of vision (33b, 34b) of the target search cameras (24, 27, 28, 33, 34) overlap, in particular overlap in a shared range of vision (37) with the overview field of vision (36a), and
- the optical axes (24a, 27a, 28a, 33a, 34a) thereof are respectively arranged offset to the measuring axis (57).

7. The laser tracker (10, 11, 12) as claimed in claim 5 or 6,
**characterized in that**, using each of the target search cameras (24, 27, 28, 33, 34), respectively a search image (62) having search image positions (63a-d) can be acquired and respective search image positions (63a-d) representing a shared target can be grouped such that coarse distances to the targets (64a-c, 81) can be determined as a function of the grouped search image positions (63a-d), in particular spatial coarse positions of the targets (64a-c, 81), in particular wherein
- the coarse distances can be linked to respective items of image information of the overview image such that an at least partially perspective environmental image can be generated by plastically displaying pixels or image regions in the overview image, which correspond with respect to position to the search image positions acquired in the search image, based on the derived coarse distances, and/or
- in the scope of the target provision functionality, as a function of the search image positions (63a-d), the graphic markings (66a-d) are incorporated into the overview image (61a, 61b) or respectively into the at least partially perspective environmental image, in particular wherein the markings (66a-d) are incorporated as a function of the coarse distances, in particular as a function of the coarse positions.

8. The laser tracker (10, 11, 12) as claimed in any one of claims 1 to 7,
**characterized in that** the laser tracker has one further or multiple further overview cameras for acquiring one further or multiple further overview images which at least partially reproduce the visual spectral range, wherein a perspective overview image can be generated from the overview image and the one further or the multiple further overview images, and the target provision functionality is configured such that upon execution of the target provision functionality, the graphic markings are incorporated into the perspective overview image.

9. The laser tracker (10, 11, 12) as claimed in any one of claims 1 to 8,
**characterized in that** the laser tracker (10, 11, 12) has
- a support (30), which is pivotable by a motor about the standing axis (41) relative to the base (40) and defines the inclination axis (31), and
- a targeting unit (20), which is implemented as a beam deflection unit and is pivotable by a motor about the inclination axis (31) relative to the support (30), having a telescope unit for emitting the measuring radiation (17, 21) and for receiving at least a part of the measuring radiation (17, 21) reflected on the target (64a-c, 81).

10. The laser tracker (10, 11, 12) as claimed in any one of claims 1 to 9,
**characterized in that** the target provision functionality provides a position-faithful transfer of the search image positions (63a-d) into the overview image (61a, 61b) and the targets (64a-c, 81) can be displayed in a position-faithful manner in the overview image (61a, 61b) by means of the graphic markings (66a-d).

11. A system made of a laser tracker (10, 11, 12) as claimed in any one of claims 1 to 10 and a control unit for controlling the laser tracker (10, 11, 12),
**characterized in that** the control unit has a display unit for the graphic display of the overview image (61a, 61b) and the markings (66a-d).

12. The system as claimed in claim 11,
**characterized in that** the system has a selection function, wherein
- in the scope of the selection function, a desired marking is selectable from the markings (66a-d) incorporated into the overview image (61a, 61b) by means of the display unit, in particular by a user, and/or
- a measuring sequence of the targets (64a-c, 81) represented by the markings (66a-d) is definable by means of the selection function, in particular wherein the targets (64a-c, 81) can be targeted and surveyed in the measuring sequence successively by an alignment of the measuring radiation (17, 21) on the targets (64a-c, 81).

13. A target provision method for incorporating graphic markings (66a-d) into an overview image (61a, 61b) using a laser tracker (10, 11, 12) having
- a base (40) defining a standing axis (41),
- a beam deflection unit for emitting measuring radiation (17, 21) and for receiving at least a part of the measuring radiation (17, 21) reflected on an object (64a-c, 81), wherein the beam deflection unit is pivotable by a motor about the standing axis and an inclination axis (31) relative to the base (40),
- a distance measuring unit for precisely determining the distance by means of the measuring radiation (17, 21), and
- an angle measuring functionality for determining an alignment of the beam deflection unit relative to the base (40),
wherein, in the scope of the target provision method,
- an illumination of a target search field of vision (33b, 34b) using electromagnetic illumination radiation,
- an acquisition of a search image (62) in the target search field of vision (33b, 34b) for the position-dependent identification of targets (64a-c, 81), wherein illumination radiation reflections, which represent positions of reflective targets (64a-c, 81), are identified with the position-sensitive detector as search image positions (63a-d) in the search image (62), and
- an acquisition of the overview image (61a, 61b), which at least partially reproduces the visual spectral range, wherein an overview field of vision (36a) is defined,
wherein
- the overview field of vision (36a) overlaps with the target search field of vision (33b, 34b) and
- a recording of the search image (62) and a recording of the overview image (61a, 61b) of respectively known position and in known alignment relationship are performed,
**characterized in that** the graphic markings (66a-d) are incorporated into the overview image (61a, 61b) by means of image processing as a function of the search image positions (63a-d) and whilst taking into account the position and alignment relationship, wherein the markings (66a-d) represent the targets (64a-c, 81) in the overview image (61a, 61b),
wherein the illumination radiation has a defined infrared illumination wavelength range, and the target search camera (24, 27, 28, 33, 34) is implemented to acquire this radiation in a narrowband range, which comprises the defined illumination wavelength range.

14. The target provision method as claimed in claim 13,
**characterized in that**
- at least one further acquisition of a search image (60) having further search image positions (63a-d) of at least one further known position and in known alignment relationship is performed,
- respective search image positions (63a-d) representing a shared target are grouped and coarse distances to the targets (64a-c, 81) are determined as a function of the grouped search image positions, in particular spatial coarse positions of the targets (64a-c, 81), and
- in the scope of the target provision method, the markings (66a-d)
- are incorporated into the overview image (61a, 61b) as a function of the search image positions (63a-d), and/or
- are incorporated as a function of the coarse distances, in particular as a function of the coarse positions.

15. A computer program product, which is stored on a machine-readable carrier, for controlling
- the illumination of the target search field of vision (33b, 34b),
- the acquisition of the search image (62), and
- the acquisition of the overview image (61a, 61b), and for executing
- the incorporation of the graphic markings (66a-d) into the overview image (61a, 61b) as a function of the search image positions (63a-d) and whilst taking into account the position and alignment relationship by means of image processing of the target provision method as claimed in claim 13 or 14, when the computer program product is executed on a processing unit of a laser tracker (10, 11, 12) as claimed in any one of claims 1 to 10.

## Revendications

1. Laser de relevé (10, 11, 12) destiné à poursuivre en continu un objet réfléchissant et à déterminer la position dudit objet, comportant
• une base (40) définissant un axe vertical (41),
• une unité de guidage de faisceau destinée à émettre un rayonnement de mesure (17, 21) et à recevoir au moins une partie dudit rayonnement de mesure (17, 21) réfléchi par l'objet,
□ l'unité de guidage de faisceau pouvant pivoter de manière motorisée sur l'axe vertical (41) et sur un axe d'inclinaison (31) par rapport à la base (40) et
□ un axe de mesure (57) étant défini par la direction d'émission du rayonnement de mesure (17, 21),
• une unité de mesure de distance destinée à mesurer précisément la distance par rapport à l'objet au moyen du rayonnement de mesure (17, 21),
• une fonctionnalité de mesure d'angle destinée à déterminer une orientation de l'unité de guidage de faisceau par rapport à la base (40),
• une unité de recherche de cible comportant
□ des moyens d'éclairage (25) destinés à produire un rayonnement d'éclairage électromagnétique et
□ au moins une caméra de recherche de cible (24, 27, 28, 33, 34) comportant un détecteur sensible à la position,
• ladite caméra de recherche de cible (24, 27, 28, 33, 34) définissant un champ de vision de recherche de cible (33b, 34b),
• ledit champ de vision de recherche de cible (33b, 34b) pouvant être éclairé par les moyens d'éclairage (25),
• la caméra de recherche de cible (24, 27, 28, 33, 34) pouvant acquérir une image de recherche (62) afin d'identifier des cibles (64a-c, 81) en fonction de la position, et
• la position de reflets du rayonnement d'éclairage détectés dans l'image de recherche (62) et représentant chacun une cible (64a-c, 81) reflétée, pouvant être identifiée au moyen du détecteur sensible à la position et déterminée en tant que position en image de recherche (63a-d) dans l'image de recherche (62),
• une caméra de vue d'ensemble (26, 36),
□ le champ de vision de vue d'ensemble (36a) de la caméra de vue d'ensemble (26, 36) chevauchant le champ de vision de recherche de cible (33b, 34b),
□ la caméra de vue d'ensemble (26) pouvant acquérir une image de vue d'ensemble (61a, 61b) restituant au moins en partie le domaine spectral visuel, et
□ la caméra de recherche de cible (24, 27, 28, 33, 34) et la caméra de vue d'ensemble (26, 36) étant disposées l'une par rapport à l'autre dans une relation de position et d'orientation connue, et
• une unité de traitement,
**caractérisé en ce que**
le laser de relevé (10, 11, 12) possède une fonctionnalité de mise à disposition de cible telle que, lors de son exécution par l'unité de traitement en fonction des positions en image de recherche (63a-d) et compte tenu de la relation de position et d'orientation, des marquages graphiques (66a-d) représentant les cibles (64a-c, 81) dans l'image de vue d'ensemble (61a, 61b) sont insérés par traitement d'image dans l'image de vue d'ensemble (61a, 61b),
le rayonnement d'éclairage présentant un domaine de longueur d'onde d'éclairage infrarouge défini et la caméra de recherche de cible (24, 27, 28, 33, 34) étant conçue pour détecter ce rayonnement sur une bande étroite dans un domaine qui contient ledit domaine de longueur d'onde d'éclairage défini.

2. Laser de relevé (10, 11, 12) selon la revendication 1,
**caractérisé en ce que**
la caméra de recherche de cible (24, 27, 28, 33, 34) est disposée de manière que son axe optique (24a, 27a, 28a, 33a, 34a) est décalé par rapport à l'axe de mesure (57).

3. Laser de relevé (10, 11, 12) selon l'une des revendications 1 à 2,
**caractérisé en ce que**
en fonction des reflets du rayonnement d'éclairage détectés dans l'image de recherche (62), il est possible de déterminer une forme et notamment une étendue spatiale des cibles (64a-c, 81), et il est possible de représenter les marquages (66a-d) dans l'image de vue d'ensemble (61a, 61b) en fonction de la forme et notamment de l'étendue spatiale.

4. Laser de relevé (10, 11, 12) selon l'une des revendications 1 à 3,
**caractérisé en ce que**
la caméra de recherche de cible (24, 27, 28, 33, 34) et la caméra de vue d'ensemble (26, 36) présentent des distances focales définies, notamment identiques, notamment constantes,
et/ou
la caméra de recherche de cible (24, 27, 28, 33, 34) est conçue de manière que son axe optique (24a, 27a, 28a, 33a, 34a) est décalé par rapport à l'axe optique (26a) de la caméra de vue d'ensemble (26, 36), notamment décalé parallèlement.

5. Laser de relevé (10, 11, 12) selon l'une des revendications 1 à 4,
**caractérisé en ce que**
l'unité de recherche de cible possède une autre ou plusieurs autres caméras de recherche de cible (24, 27, 28, 33, 34) avec chacune un détecteur sensible à la position et chacune un champ de vision de recherche de cible (33b, 34b), la ou lesdites autres caméras de recherche de cible (24, 27, 28, 33, 34) étant notamment conçues pour détecter un rayonnement électromagnétique dans un domaine situé autour du domaine de longueur d'onde d'éclairage.

6. Laser de relevé (10, 11, 12) selon la revendication 5,
**caractérisé en ce que**
les caméras de recherche de cible (24, 27, 28, 33, 34) sont chacune disposées avec une relation de position et d'orientation connue et fixe par rapport aux autres et par rapport à la caméra de vue d'ensemble (26, 36), de manière que
• les champs de vision de recherche de cible (33b, 34b) des caméras de recherche de cible (24, 27, 28, 33, 34) se chevauchent, notamment chevauchent le champ de vision de vue d'ensemble (36a) dans une zone de vision commune (37), et
• les axes optiques (24a, 27a, 28a, 33a, 34a) sont chacun décalés par rapport à l'axe de mesure (57).

7. Laser de relevé (10, 11, 12) selon la revendication 5 ou 6,
**caractérisé en ce que**
chacune des caméras de recherche de cible (24, 27, 28, 33, 34) peut acquérir une image de recherche (62) avec des positions en image de recherche (63ad), et il est possible de grouper les diverses positions en image de recherche (63a-d) représentant une cible commune de manière qu'il soit possible de déterminer des distances grossières par rapport aux cibles (64a-c, 81) en fonction des positions en image de recherche (63a-d) groupées, notamment des positions grossières des cibles (64a-c, 81) dans l'espace, sachant notamment que
• lesdites distances grossières peuvent être reliées aux informations d'image respectives de l'image de vue d'ensemble de manière qu'il soit possible de créer une image globale au moins en partie en perspective, grâce au fait que sont représentés, de manière plastique et à partir des distances grossières déduites, des points d'image ou des zones d'image dans l'image de vue d'ensemble, dont les positions correspondent aux positions en image de recherche acquises dans l'image de recherche, et/ou
• dans le cadre de la fonctionnalité de mise à disposition de cible, les marquages graphiques (66a-d) sont insérés dans l'image de vue d'ensemble (61a, 61b) ou dans l'image globale au moins en partie en perspective en fonction des positions en image de recherche (63a-d), les marquages (66a-d) étant notamment insérés en fonction des distances grossières, notamment en fonction des positions grossières.

8. Laser de relevé (10, 11, 12) selon l'une des revendications 1 à 7,
**caractérisé en ce que**
ledit laser de relevé possède une autre ou plusieurs autres caméras de vue d'ensemble destinées à acquérir une ou plusieurs images de vue d'ensemble supplémentaires restituant au moins en partie le domaine spectral visuel, une image de vue d'ensemble en perspective pouvant être créée à partir de l'image de vue d'ensemble et desdites une ou plusieurs images supplémentaires, et la fonctionnalité de mise à disposition de cible étant conçue de manière que, lors de son exécution, les marquages graphiques sont insérés dans l'image de vue d'ensemble en perspective.

9. Laser de relevé (10, 11, 12) selon l'une des revendications 1 à 8,
**caractérisé en ce que**
le laser de relevé (10, 11, 12) présente
• un support (30) pouvant pivoter de manière motorisée sur l'axe vertical (41) par rapport à la base (40) et définissant l'axe d'inclinaison (31) et
• une unité de visée (20) conçue sous la forme d'une unité de guidage de faisceau, pouvant pivoter de manière motorisée sur l'axe d'inclinaison (31) par rapport au support (30), dotée d'une unité télescopique destinée à émettre le rayonnement de mesure (17, 21) et à recevoir au moins une partie dudit rayonnement de mesure (17, 21) réfléchi par la cible (64a-c, 81).

10. Laser de relevé (10, 11, 12) selon l'une des revendications 1 à 9,
**caractérisé en ce que**
la fonctionnalité de mise à disposition de cible procure un transfert fidèle, quant aux positions, des positions en image de recherche (63a-d) dans l'image de vue d'ensemble (61a, 61b), et les cibles (64a-c, 81) peuvent être affichées au moyen des marquages graphiques (66a-d) de manière fidèle quant aux positions dans l'image de vue d'ensemble (61a, 61b).

11. Système constitué d'un laser de relevé (10, 11, 12) selon l'une des revendications 1 à 10 et d'une unité de commande destinée à commander le laser de relevé (10, 11, 12),
**caractérisé en ce que**
l'unité de commande comporte une unité d'affichage destinée à l'affichage graphique de l'image de vue d'ensemble (61a, 61b) et des marquages (66a-d).

12. Système selon la revendication 11,
**caractérisé en ce que**
ledit système possède une fonction de choix telle que
• dans le cadre de ladite fonction de choix, un marquage souhaité parmi les marquages (66a-d) insérés dans l'image de vue d'ensemble (61a, 61b) peut être choisi au moyen de l'unité d'affichage, notamment par un utilisateur, et/ou
• il est possible de définir, au moyen de ladite fonction de choix, une séquence de mesure des cibles (64a-c, 81) représentées par les marquages (66a-d), les cibles (64a-c, 81) pouvant notamment être visées et mesurées successivement selon ladite séquence de mesure par une orientation du rayonnement de mesure (17, 21) sur les cibles (64a-c, 81).

13. Procédé de mise à disposition de cibles destiné à insérer des marquages graphiques (66a-d) dans une image de vue d'ensemble (61a, 61b), avec un laser de relevé (10, 11, 12) présentant
• une base (40) définissant un axe vertical (41),
• une unité de guidage de faisceau destinée à émettre un rayonnement de mesure (17, 21) et à recevoir au moins une partie dudit rayonnement de mesure (17, 21) réfléchi par un objet (64a-c, 81), l'unité de guidage de faisceau pouvant pivoter de manière motorisée sur l'axe vertical et sur un axe d'inclinaison (31) par rapport à la base (40),
• une unité de mesure de distance destinée à mesurer précisément la distance au moyen du rayonnement de mesure (17, 21), et
• une fonctionnalité de mesure d'angle destinée à déterminer une orientation de l'unité de guidage de faisceau par rapport à la base (40),
et dans lequel procédé de mise à disposition de cibles se produisent les étapes suivantes :
• éclairage d'un champ de vision de recherche de cible (33b, 34b) au moyen d'un rayonnement d'éclairage électromagnétique,
• acquisition d'une image de recherche (62) dans le champ de vision de recherche de cible (33b, 34b) afin d'identifier des cibles (64a-c, 81) en fonction de la position, la position de reflets du rayonnement d'éclairage, représentant des cibles (64a-c, 81) reflétées, étant identifiée au moyen du détecteur sensible à la position en tant que position en image de recherche (63a-d) dans l'image de recherche (62), et
• acquisition de l'image de vue d'ensemble (61a, 61b) restituant au moins en partie le domaine spectral visuel, un champ de vision de vue d'ensemble (36a) étant ainsi défini,
et dans lequel
• le champ de vision de vue d'ensemble (36a) chevauche le champ de vision de recherche de cible (33b, 34b) et
• l'image de recherche (62) et l'image de vue d'ensemble (61a, 61b) sont prises à partir d'une position connue respective et dans une relation d'orientation connue,
**caractérisé en ce que**
en fonction des positions en image de recherche (63a-d) et compte tenu des positions connues et de la relation d'orientation connue, les marquages graphiques (66a-d) représentant les cibles (64a-c, 81) dans l'image de vue d'ensemble (61a, 61b) sont insérés par traitement d'image dans l'image de vue d'ensemble (61a, 61b),
le rayonnement d'éclairage présentant un domaine de longueur d'onde d'éclairage infrarouge défini et la caméra de recherche de cible (24, 27, 28, 33, 34) étant conçue pour détecter ce rayonnement sur une bande étroite dans un domaine qui contient ledit domaine de longueur d'onde d'éclairage défini.

14. Procédé de mise à disposition de cibles selon la revendication 13,
**caractérisé en ce que**
• il se produit au moins une autre acquisition d'une image de recherche (60) avec d'autres positions en image de recherche (63a-d) à partir d'au moins une autre position connue et dans une relation d'orientation connue,
• les diverses positions en image de recherche (63a-d) représentant une cible commune sont groupées et des distances grossières par rapport aux cibles (64a-c, 81) sont déduites en fonction des positions en image de recherche groupées, notamment des positions grossières des cibles (64a-c, 81) dans l'espace, et
• dans le cadre du procédé de mise à disposition de cibles, les marquages (66a-d)
□ sont insérés dans l'image de vue d'ensemble (61a, 61b) en fonction des positions en image de recherche (63a-d), et/ou
□ sont insérées en fonction des distances grossières, notamment en fonction des positions grossières.

15. Produit-programme d'ordinateur enregistré sur un support lisible par une machine, destiné à commander
• l'éclairage du champ de vision de recherche de cible (33b, 34b),
• l'acquisition de l'image de recherche (62) et
• l'acquisition de l'image de vue d'ensemble (61a, 61b),
et à exécuter
• l'insertion des marquages graphiques (66a-d) par traitement d'image dans l'image de vue d'ensemble (61a, 61b) en fonction des positions en image de recherche (63a-d) et compte tenu de la relation de position et d'orientation suivant le procédé de mise à disposition de cibles selon la revendication 13 ou 14, lorsque le produit-programme d'ordinateur est exécuté par une unité de traitement d'un laser de relevé (10, 11, 12) selon l'une des revendications 1 à 10.
